(19) Europäisches Patentamt
European Patent Office
Office européen des brevets

(11) **EP 2 541 093 B1**

(12) **EUROPEAN PATENT SPECIFICATION**

(45) Date of publication and mention
of the grant of the patent:
**22.11.2017 Bulletin 2017/47**

(51) Int Cl.:
*F16F 7/12* (2006.01)      *B62D 21/15* (2006.01)
*B62D 25/20* (2006.01)      *C21D 1/09* (2006.01)
*C21D 9/00* (2006.01)      *B23K 26/00* (2014.01)

(21) Application number: **11820040.1**

(22) Date of filing: **26.08.2011**

(86) International application number:
**PCT/JP2011/069291**

(87) International publication number:
**WO 2012/026580 (01.03.2012 Gazette 2012/09)**

(54) **IMPACT ABSORBING MEMBER**

STOSSDÄMPFENDES ELEMENT

ELÉMENT ABSORBANT LES IMPACTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.08.2010 JP 2010189477**
**26.08.2010 JP 2010189431**

(43) Date of publication of application:
**02.01.2013 Bulletin 2013/01**

(73) Proprietor: **Nippon Steel & Sumitomo Metal Corporation**
**Tokyo 100-8071 (JP)**

(72) Inventors:
• **KUWAYAMA Takuya**
**Tokyo 100-8071, (JP)**
• **SUZUKI Noriyuki**
**Tokyo 100-8071, (JP)**
• **MIYAZAKI Yasunobu**
**Tokyo 100-8071, (JP)**
• **KAWASAKI Kaoru**
**Tokyo 100-8071, (JP)**
• **YONEMURA Shigeru**
**Tokyo 100-8071, (JP)**

(74) Representative: **Vossius & Partner**
**Patentanwälte Rechtsanwälte mbB**
**Siebertstrasse 3**
**81675 München (DE)**

(56) References cited:
JP-A- 6 073 439      JP-A- 10 244 955
JP-A- H07 119 892      JP-A- 2003 095 135
JP-A- 2004 114 912      US-A1- 2004 201 256

**Description**

Technical Field

The present invention relates to an impact-absorbing member subjected to a thermal treatment with a laser light.
The present application claims priority based on Japanese Patent Application No. 2010-189431 filed in Japan on August 26, 2010, and Japanese Patent Application No. 2010-189477 filed in Japan on August 26, 2010.

Background Art

As an impact-absorbing member, tubular press-formed parts having polygonal cross section are widely used in automobiles or other vehicles. In general, the impact-absorbing member is used in two applications. First, the impact-absorbing member forms, for example, an engine compartment and trunk room, and is crumpled when the automobile collides so as to absorb the impact energy. Second, the impact-absorbing member forms, for example, a cabin, and prevents the cabin from deforming when the automobile collides in order to secure survival space of a passenger.
Of the above-described types of impact-absorbing members, the impact-absorbing member that absorbs the impact energy when the automobile collides deforms in a crumple form when receiving the impact energy in the axial direction of the impact-absorbing member to absorb the impact energy. In order to absorb the greater impact energy with the limited deformed amount through crumple deformation, it is effective to increase the size in cross section or plate thickness of the impact-absorbing member. With this method, however, the volume or weight of the impact-absorbing member also increases, which leads to a deterioration in fuel efficiency as well as an increase in damage to the opposing vehicle at the time of a vehicle-to-vehicle collision.
There are proposed various methods of partially enhancing the strength of the impact-absorbing member by partially applying a laser thermal treatment to the impact-absorbing member, which is a press formed part (for example, Patent Documents 1 to 4). In the present application, the laser thermal treatment represents a treatment in which a laser beam having a high energy density is emitted to an untreated impact-absorbing member to locally heat the impact-absorbing member to a transformation temperature or melting point or more, and then, the impact-absorbing member is quench hardened through a self cooling mechanism.
For example, Patent Document 1 discloses a method of enhancing the strength of a press formed item by locally applying a thermal treatment to the press formed item using a laser. More specifically, in Patent Document 1, after a steel sheet is cold formed, the steel sheet is rapidly heated with a laser beam to a predetermined temperature or more in a striped form or a lattice form. Then, the heated steel sheet is cooled, thereby strengthening the press formed item that has been cold formed. With this method, the occurrence of distortion after the thermal treatment can be suppressed as compared with a case where the thermal treatment is uniformly applied to the entire press formed item. In particular, with the method disclosed in Patent Document 1, the laser thermal treatment is applied onto the external surface of the press formed item in the striped form in the longitudinal direction, or onto the entire external surface of the press formed item in a lattice form.
Patent Document 2 discloses a method of locally applying a thermal treatment to a press formed item for the purpose of enhancing the strength of the press formed item while suppressing the occurrence of the distortion. In particular, with the method disclosed in Patent Document 2, the thermal treatment is applied to a portion of the press formed item that requires strength, for example, is applied to a highly stressed portion, which is obtained, for example, from analysis of a vehicle crash test or a finite element method. More specifically, the laser thermal treatment is applied to the press formed item in a streaked form or in a lattice form extending over the entire length in the longitudinal direction of the press formed item.
Patent Document 3 discloses a method of using a steel sheet containing a specific component and applying a laser thermal treatment to the steel sheet. With this method, it is possible to enhance the strength of a portion subjected to the laser thermal treatment while maintaining workability of the steel sheet. The method disclosed in Patent Document 3 applies the laser thermal treatment to a portion that requires enhanced strength, and more specifically, applies the laser thermal treatment to the press formed item in a straight form extending over the entire length in the longitudinal direction of the press formed item.
Patent Document 4 discloses a method of applying a laser thermal treatment on an outer peripheral surface of the press formed item in a line form along a direction in which a compressive load is applied, for the purpose of enhancing an impact-energy absorbing ability of the press formed item. With this method, the laser thermal treatment is applied in a direction which is the same as the direction in which an impact load is inputted. This method makes it possible to increase resistance against deformation, and to cause a crumple mode to occur regularly. In particular, the method disclosed in Patent Document 4 continuously applies the thermal treatment with a laser light to the entire length of the press formed item in the longitudinal direction along the direction in which the compressive load is inputted.
With any of the methods disclosed in Patent Documents 1 to 4, the laser thermal treatment is applied to a portion of the external surface of the press formed item that requires the strength. More specifically, the laser thermal treatment is applied in the line form extending continuously over the entire length of the press formed item in the longitudinal direction, or the thermal treatment is applied with the laser light in the lattice form or other form over the entire external surface of the press formed item.

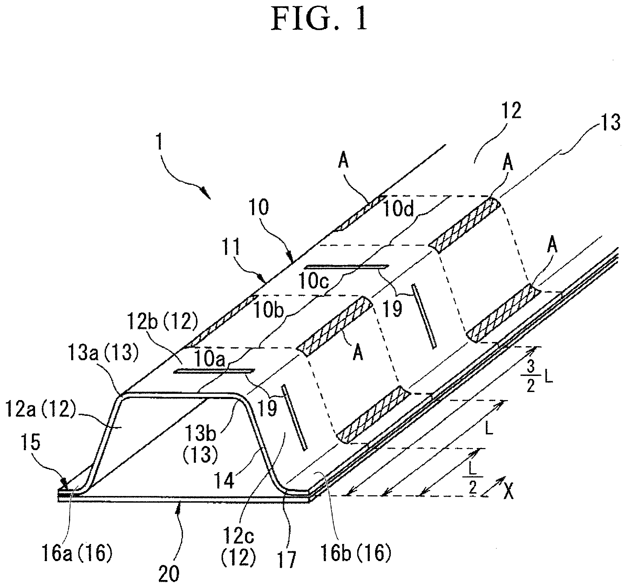

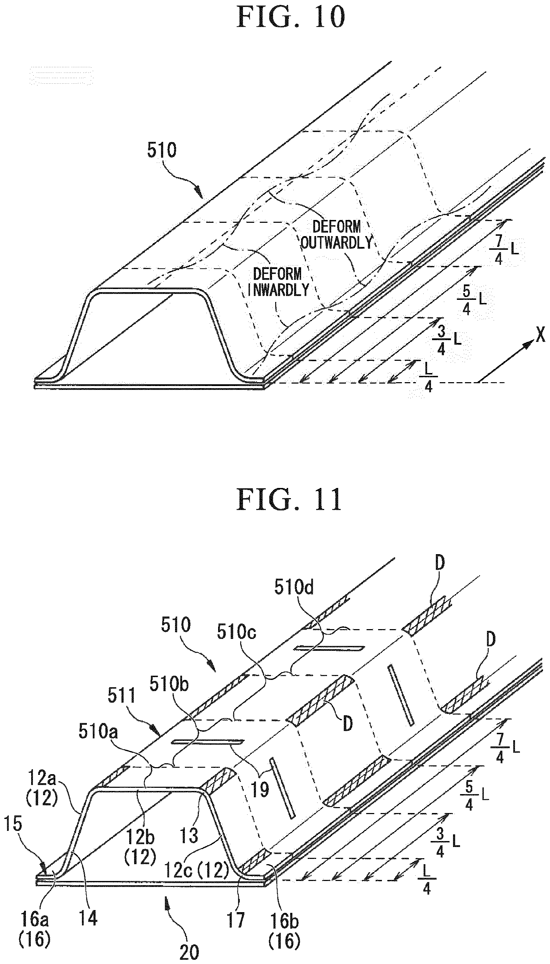

JP 07-119892 describes a high strength member to which heat treatment is applied locally in order to increase the strength. JP 07-119892 teaches to either thermally treat the entire corner portions with laser light as shown, e.g., in Fig. 1 or to provide for an alternating arrangement of thermally treated portions and untreated portions as shown, e.g., in Fig. 10.

Related Art Documents

Patent Documents

Patent Document 1: Japanese Unexamined Patent Application, First Publication No. S61-99629
Patent Document 2: Japanese Unexamined Patent Application, First Publication No. H04-72010
Patent Document 3: Japanese Unexamined Patent Application, First Publication No. H06-73439
Patent Document 4: Japanese Unexamined Patent Application, First Publication No. 2004-108541

Disclosure of the Invention

Problems to be Solved by the Invention

With the impact-absorbing member that absorbs the impact energy at the time of collision, the amount of energy absorbed by the impact-absorbing member largely varies depending on deformation modes in the crumple deformation. The deformation mode as described above generally includes two deformation modes: a compact mode and a non-compact mode. These illustrate how the impact-absorbing member crumples and deforms when the impact energy is applied to the impact-absorbing member.

In the deformation mode named the so-called compact mode, the impact-absorbing member largely bends and distorts when the impact energy is applied to the impact-absorbing member, and local folding does not occur. As a result, the entire impact-absorbing member deforms in a folded manner. In the deformation mode named the so-called non-compact mode, when the buckling occurs as the impact energy is applied to the impact-absorbing member, the folding of the impact-absorbing member is limited to local portions, and deformation of the impact-absorbing member scarcely occurs between the folded portions. As a result, a portion located between the folded portions remains flat.

The absorption of impact energy by the impact-absorbing member is made possible through plastic deformation of the impact-absorbing member. Thus, in the non-compact mode, the portion that remains flat does not absorb the impact energy, and hence, the impact energy cannot be absorbed efficiently. On the other hand, in the compact mode, there is no portion that remains flat. Thus, the entire portion of the impact-absorbing member contributes to the absorption of the impact energy, which enables efficient absorbtion of the impact energy. Accordingly, from the viewpoint of efficiently absorbing the impact energy, it is necessary to cause crumple deformation to occur in the compact mode.

With the methods disclosed in Patent Documents 1 to 4 described above, the laser thermal treatment is applied in a straight form extending over the entire length in the longitudinal direction of the press formed item, or the laser thermal treatment is applied in a lattice form over the entire length of the external surface of the press formed item. These types of laser thermal treatments do not contribute to the deformation mode in the crumple deformation. Thus, when the press formed item having the laser thermal treatment applied thereto is subjected to crumple deformation, the press formed item may deform in the non-compact mode, and there is a possibility that the impact energy will not be able to be absorbed efficiently.

In view of the problems described above, an object of the present invention is to provide an impact-absorbing member exhibiting enhanced impact-energy absorbing ability, by applying a thermal treatment with a laser light to an appropriate portion of the impact-absorbing member.

Means for Solving the Problems

For an impact-absorbing member having a tubular body including plural flat portions and a corner portion provided between the flat portions, the present inventors made a study of a relationship between a portion of an untreated impact-absorbing member to which a thermal treatment with a laser light is applied and an impact-energy absorbing ability of the impact-absorbing member to which the laser thermal treatment has been applied.

As a result, the present inventors found that the impact-energy absorbing ability can be enhanced by applying the laser thermal treatment intensively to a portion that deforms in a manner that it expands outwardly when the impact-absorbing member deforms in the compact mode.

The present invention has been made on the basis of the findings above, and relates to an impact-absorbing member according to claim 1 and to an impact-absorbing member according to claim 3. Preferred features of the invention are described in the dependent claims.

Effects of the Invention

According to the present invention, the impact-energy absorbing ability of the structural member can be enhanced by applying the laser thermal treatment to appropriate portions.

Brief Description of the Drawings

FIG. 1 is a perspective view illustrating an example of an impact-absorbing member according to the first embodiment of the present invention.

FIG. 2A is a sectional view illustrating the same impact-absorbing member.

FIG. 2B is a sectional view illustrating a modification example of the impact-absorbing member according to the first embodiment.

FIG. 2C is a sectional view illustrating another modification example of the impact-absorbing member according to the first embodiment.

FIG. 3A is a diagram for explaining a deformation mode.

FIG. 3B is a diagram for explaining a deformation mode.

FIG. 4 is a diagram illustrating how the impact-absorbing member illustrated in FIG. 1 deforms in a compact mode.

FIG. 5 is a diagram illustrating how a laser thermal treatment is applied to each corner portion.

FIG. 6 is a diagram illustrating a modification example of the impact-absorbing member according to the embodiment illustrated in FIG. 1 in which, in addition to the laser-thermally treated portion illustrated in FIG. 1, a laser thermal treatment is also applied to a different portion.

FIG. 7 is a diagram illustrating a modification example of the impact-absorbing member according to the embodiment illustrated in FIG. 1 in which, in addition to the laser-thermally treated portion illustrated in FIG. 1, a laser thermal treatment is also applied to a different portion.

FIG. 8 is a perspective view illustrating a modification example of the impact-absorbing member having a structure different from that of the impact-absorbing member illustrated in FIG. 1.

FIG. 9 is a diagram illustrating an example of an overview of the impact-absorbing member illustrated in FIG. 1.

FIG. 10 is a diagram illustrating how the impact-absorbing member deforms in the compact mode in the case where the same impact-absorbing member has a longitudinal end portion formed as a free end.

FIG. 11 is a perspective view illustrating an example of an impact-absorbing member according to a second embodiment of the present invention.

FIG. 12A is a diagram illustrating a process of producing an impact-absorbing member used in Examples.

FIG. 12B is a diagram illustrating a process of producing an impact-absorbing member used in Examples.

FIG. 12C is a diagram illustrating a process of producing an impact-absorbing member used in Examples.

FIG. 12D is a diagram illustrating a process of producing an impact-absorbing member used in Examples.

FIG. 13A is a side view illustrating a structural-member assembled body used in Examples.

FIG. 13B is a side view illustrating a structural-member assembled body used in Examples.

FIG. 14 is a perspective view illustrating a structural-member assembled body of Example 1.

FIG. 15 is a perspective view illustrating a structural-member assembled body of Comparative Example 2.

FIG. 16 is a perspective view illustrating a structural-member assembled body of Example 2.

FIG. 17 is a perspective view illustrating a structural-member assembled body of Example 3.

FIG. 18 is a perspective view illustrating a structural-member assembled body of Example 4.

FIG. 19 is a perspective view illustrating a structural-member assembled body of Comparative Example 7.

FIG. 20 is a perspective view illustrating a structural-member assembled body of Example 8.

FIG. 21 is a perspective view illustrating an example of an impact-absorbing member according to a third embodiment of the present invention.

FIG. 22 is a diagram illustrating an end surface of the same impact-absorbing member.

FIG. 23A is an enlarged sectional view illustrating a corner portion of the same impact-absorbing member.

FIG. 23B is an enlarged sectional view illustrating a corner portion of the same impact-absorbing member.

FIG. 24 is a photograph showing the impact-absorbing member crumpled in the compact mode.

FIG. 25 is a photograph showing the impact-absorbing member crumpled in the non-compact mode.

FIG. 26 is a graph showing results of an impact test.

Embodiments of the Invention

Hereinbelow, embodiments of the present invention will be described in detail with reference to the drawings. Note that, in the following description, the same constituent components are denoted by the same reference numerals.

[First Embodiment]

FIG. 1 is a perspective view illustrating a first embodiment of a structural member according to the present invention. As illustrated in FIG. 1, the impact-absorbing member 10 includes a partial tubular body (tubular body) 11 and a flange portion 15. The partial tubular body 11 has plural flat portions 12 having a plane shape, and plural corner portions 13 provided between the flat portions 12. In the example illustrated in FIG. 1, the partial tubular body 11 includes three flat portions 12a to 12c, and two corner portions 13a and 13b provided between the flat portions 12a to 12c.

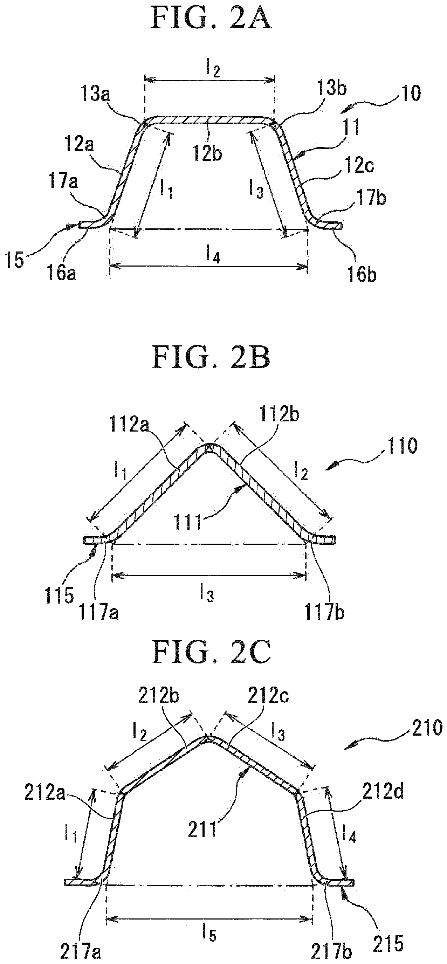

FIG. 2A is a sectional view taken along a plane perpendicular to the longitudinal direction (extending direction) of the structural-member assembled body 1 illustrated in FIG. 1. As can be understood from FIG. 1 and FIG. 2A, the partial tubular body 11 of the impact-absorbing member 10 has a quadrilateral shape (polygonal shape) with an open cross section in which one side is opened in cross section located at a plane perpendicular to the longitudinal direction of the partial tubular body 11 (hereinafter, referred to as "vertical section"). In other words, the three flat portions 12a to 12c of the partial tubular body 11 correspond to three sides of a quadrilateral cross section of the partial tubular body 11.

The flange portion 15 of the impact-absorbing member 10 includes two flat portions 16a and 16b each extending from each edge of the partial tubular body 11 in cross section. The two flat portions 16a and 16b of the flange portion 15 are connected with the partial tubular body 11 by way of corner portions 17a and 17b. The two flat portions 16a and 16b of the flange portion 15 are formed so as to extend outwardly from both edges of the quadrilateral shape with one side being opened of the partial tubular body 11 when viewed on a plane at which the opened side of the quadrilateral is located. In other words, in this embodiment, the plural flat portions include a pair of flat portions (side wall portions) 12a and 12c facing each other, a flat portion (upper wall portion) 12b connecting the upper ends of the pair of the flat portions 12a and 12c, and the flange portion 15 formed in a direction to be away from each other and extending from a lower end of each of the side wall portions 12a and 12c.

Further, as illustrated in FIG. 1, an additional structural member 20 having a plate-like shape is disposed so as to face the flange portion 15 of the impact-absorbing member 10 and close the opened side in the quadrilateral cross section of the partial tubular body 11. The additional structural member 20 is jointed with the impact-absorbing member 10 by welding the flange portion 15 of the impact-absorbing member 10 with a portion of the additional structural member 20 that faces the flange portion 15. The impact-absorbing member 10 and the additional structural member 20 are used, for example, for a frame of a vehicle as the structural-member assembled body 1 in a state that these are jointed with each other.

The impact-absorbing member 10 and the additional structural member 20 are formed, for example, by a steel material or other material from which local quench hardening can be obtained by application of a laser thermal treatment. The term "laser thermal treatment" represents a treatment in which a laser beam having a high energy density is first emitted to an untreated impact-absorbing member to locally heat the untreated impact-absorbing member to a transformation temperature or melting point or more, and then, the heated impact-absorbing member is quench hardened through a self cooling mechanism. The impact-absorbing member 10 and the additional structural member 20 are formed into the above-described shapes by press forming or other general forming methods.

In this embodiment, the partial tubular body 11 of the impact-absorbing member 10 has a quadrilateral cross-sectional shape with one side being opened in the vertical section. However, it may be possible for the partial tubular body 11 to have any polygonal shape with one side being opened. Thus, for example, the partial tubular body 11 may have a triangle shape with one side being opened as illustrated in FIG. 2B, or may have a pentagonal shape with one side being opened as illustrated in FIG. 2C. In the case where the partial tubular body has a triangle cross-sectional shape with one side being opened in the vertical section as illustrated in FIG. 2B, the impact-absorbing member 110 includes a partial tubular body 111 having two flat portions and one corner portion, and a flange portion 115 having two flat portions connected with the partial tubular body 111 by way of the two corner portions. In the case where the partial tubular body has a pentagonal cross-sectional shape with one side being opened in the vertical section as illustrated in FIG. 2C, the impact-absorbing member 210 includes a partial tubular body 211 having four flat portions and three corner portions, and a flange portion 215 having two flat portions connected with the partial tubular body 211 by way of the two corner portions.

In this embodiment of the present invention, the laser thermal treatment is applied to a specific portion of the untreated impact-absorbing member 10 formed into the shapes as described above. Next, the portion subjected to the laser thermal treatment will be described.

In this embodiment, the portion subjected to the laser thermal treatment is determined on the basis of an average side length L in polygonal cross section of one end portion (hereinafter, referred to as "longitudinal end portion") 14 in the longitudinal direction of the impact-absorbing member 10. In particular, in this embodiment, it is preferable that the one longitudinal end portion 14 is set to an end of the impact-absorbing member 10 to which an impact energy is expected to be applied when the structural-member assembled body 1 is actually used. Thus, for example, in the case where the structural-member assembled body 1 is used as a side frame (frame extending in the front and rear direction of the vehicle) for an engine compartment of an automobile, one end portion of the side frame located on the front side of the vehicle is the one longitudinal end portion described above. In the case where the structural-member assembled body 1 is used as a side frame for a trunk room of the automobile, one end portion of the side frame located on the rear side of the vehicle is the one longitudinal end portion. In this embodiment, the portion subjected to the laser thermal treatment is determined on the basis of the average side length L as described above. Thus, the average side length L will be described first.

The partial tubular body 11 of the impact-absorbing member 10 illustrated in FIG. 1 includes the one longitudinal end portion 14 having a quadrilateral cross section with one side being opened as illustrated in FIG. 2A. The characters l1 to l4 represent lengths of respective sides (including the opened side) constituting the quadrilateral cross section. In other words, the characters 11 to 14 represent lengths of respective sides on the assumption that the partial tubular body 11 of the impact-absorbing member 10 has a closed quadrilateral cross section. More specifically, l1 is a length of a side of a flat portion 12a of the partial tubular body 111, l2 is a length of a side of a flat portion 12b, l3 is a length of a side of a flat portion 12c, and 14 is a length from a corner portion 17a to a corner portion 17b, when the impact-absorbing member 10 is viewed from cross section. The average of the lengths l1 to l4 of the respective sides in this case is the average side length L (L = (l1 + l2 + l3 + l4)/4).

Thus, for example, in the case where the impact-absorbing member 110 has a cross-sectional shape as illustrated in FIG. 2B, the average side length L is the average length L of the lengths l1 to l3 of three sides, and is (l1 + l2 + l3)/3, where 11 is a length of a side of a flat portion 112a of the partial tubular body 111, l2 is a length of a side of a flat portion 112b, and l3 is a length from a corner portion 117a to a corner portion 117b, in a cross-sectional view of the impact-absorbing member 110.

Further, in the case where the impact-absorbing member 210 has a cross-sectional shape as illustrated in FIG. 2C, the average side length L is the average length L of lengths l1 to l5 of five sides, and is (l1 + l2 + l3 + l4 + l5)/5, where 11 is a length of a side of a flat portion 212a of a partial tubular body 211, l2 is a length of a side of a flat portion 212b, l3 is a length of a side of a flat portion 212c, l4 is a length of a side of a flat portion 212d, l5 is a length from a corner portion 217a to a corner portion 217b, in a cross-sectional view of the impact-absorbing member 210.

Thus, when these are summarized, the average side length L means an average length of all of the sides constituting the polygonal cross-sectional shape at the one longitudinal end portion 14 of the partial tubular body of the impact-absorbing member having the polygonal cross section with one side being opened.

In this embodiment, portions subjected to the the laser thermal treatment are determined according to a distance X in the longitudinal direction from the the one longitudinal end portion 14 of the impact-absorbing member 10. In FIG. 1, a laser light is emitted onto a first thermally treated portion A, to which hatching is applied, to apply the thermal treatment. For the thermal treatment with the laser light in this embodiment, a YAG laser or fiber laser is used.

More specifically, when a is an integer with a value of one or more, and X is a distance in the longitudinal direction (extending direction) from the longitudinal end portion 14, the thermal treatment with the laser light is at least applied to the first thermally treated portion A of the partial tubular body 11 located in a distance X, which satisfies the following Expression (1).

$$(a - 1/2)L \leq X \leq aL \cdots \text{Expression (1)}$$

In other words, the laser thermal treatment is applied to the outer peripheral surface, which satisfies Expression (1), of the corner portions 13 and 17 of the impact-absorbing member 10. Thus, the laser thermal treatment is not applied to areas other than the corner portion 13 or 17, in other words, to the flat portion 12 or 16. Further, the laser thermal treatment is not applied to areas of the corner portion 13 or 17 of the impact-absorbing member 10 located in a longitudinal distance X of between (a - 1)L and (a - 1/2)L.

More specifically, when the impact-absorbing member 10 is separated at L/2 intervals in the longitudinal direction, and the separated portions of the impact-absorbing member 10 are denoted sequentially by partial structural members 10a, 10b, 10c, 10d, ... from the one longitudinal end portion 14, the laser thermal treatment is applied to the comer portions 13 and 17 of the partial structural members 10b and 10d (first field). The laser thermal treatment is not applied to the flat portions 12 or 16 of the partial structural members 10b and 10d (second field) of the impact-absorbing member 10, the corner portion 13 or 17 of the partial structural members 10a and 10c of the impact-absorbing member 10, or the flat portion 12 or 16 of the partial structural members 10a and 10c of the impact-absorbing member 10.

Thus, in this embodiment, the corner portions 13 and 17 of the impact-absorbing member 10 are formed such that a portion subjected to the laser thermal treatment and a portion not subjected to the laser thermal treatment are alternately arranged at L/2 intervals in the longitudinal direction from the longitudinal end portion 14.

The width of the first thermally treated portion A generated by the laser light is preferably set in the range of 0.4t to 1.6t mm, the depth of the first thermally treated portion A in the thickness direction is set preferably in the range of 0.2t to 0.8t mm (t represents a thickness of the impact-absorbing member 10), the hardness of the first thermally treated portion A is preferably not less than 1.5 times and not more than 2.5 times harder than the base steel sheet in Vickers hardness.

According to the impact-absorbing member 10 of this embodiment, with this configuration, it is possible to enhance the strength of portions of the corner portions 13 and 17, which have the laser light emitted thereonto and extend in the longitudinal direction in the distance X of between (a-1/2)L and aL, of the partial structural members 10d, 10d... of the impact-absorbing member 10. Next, an effect obtained by partially enhancing the impact-absorbing member 10 as described above will be described.

By applying the laser thermal treatment to an untreated impact-absorbing member, it is possible to enhance the strength of the portion subjected to the laser thermal treatment. Thus, by extensively applying the laser thermal treatment to the untreated impact-absorbing member, it is possible to further enhance the strength of the impact-absorbing member. With this application, the impact-absorbing member is more likely to absorb the impact energy. However, with the increase in the area subjected to the laser thermal treatment, the cost required for the increased laser thermal treatment area increases. Thus, it is necessary to enhance the impact-energy absorbing ability while reducing the area for application of the laser thermal treatment, by appropriately selecting the portions for application of the laser thermal treatment.

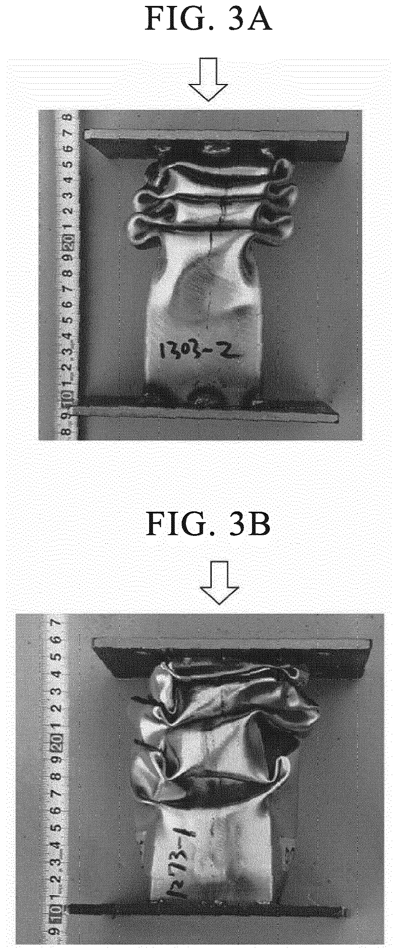

The deformation mode of the impact-absorbing member that deforms to absorb the impact energy includes a compact mode as illustrated in FIG. 3A and a non-compact mode as illustrated in FIG. 3B when an impact energy is applied in the longitudinal direction of the impact-absorbing member as described above. Of the deformation modes, crumple deformation needs to occur in the compact mode from the viewpoint of efficiently absorbing the impact energy.

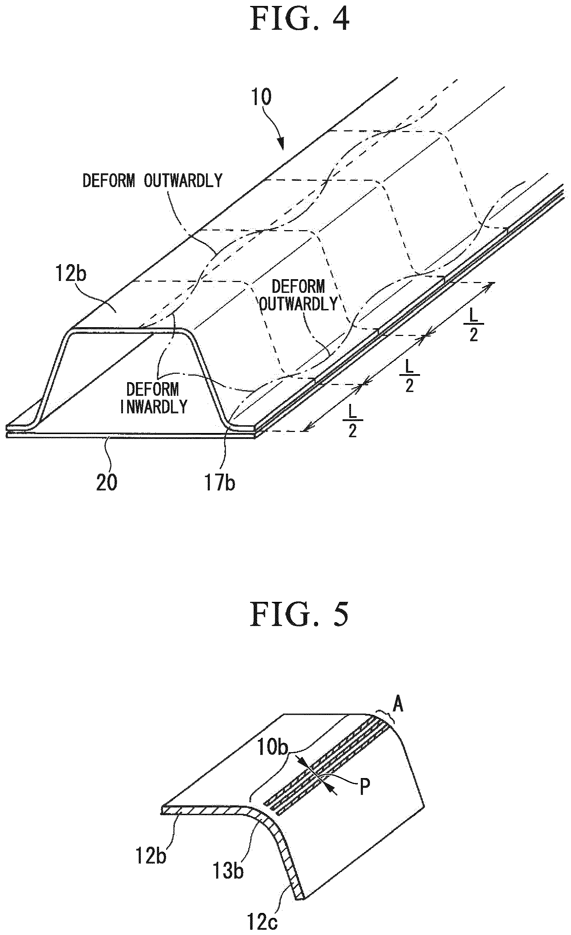

When the crumple deformation occurs in the compact mode, the impact-absorbing member crumples in a form such that a portion that dents inwardly and a portion that expands outwardly appear alternately. The present inventors found that a length cycle in which the impact-absorbing member dents inwardly once, then expands outwardly, and returns to the original position is almost equal to the average side length L at the end portion of the impact-absorbing member. This finding will be described with reference to FIG. 4.

FIG. 4 illustrates how the impact-absorbing member 10 deforms in the compact mode in the case where the one longitudinal end portion 14 of the impact-absorbing member 10 illustrated in FIG. 1 is fixed to any other member. In particular, the dot-and-dash lines in the drawing illustrate how the center of the flat portion 12b and the corner portion 17b deform. As can be understood from FIG. 4, in the case where the impact-absorbing member 10 deforms in the compact mode, the impact-absorbing member 10 dents inwardly in the region where the distance from the one longitudinal end portion 14 is in the range of 0 to L/2, and expands outwardly in the region where the distance from the one longitudinal end portion 14 is in the range of L/2 to L. Further, the impact-absorbing member 10 dents inwardly in the region where the distance is in the range of L to 3L/2, and expands outwardly in the region where the distance is in the range of 3L/2 to 2L. Thereafter, the impact-absorbing member 10 repeats the dent and expansion in a similar manner. This means that, in the case where the impact-absorbing member 10 deforms in the compact mode, the inward dent and the outward expansion are repeated in the cycle L.

Thus, in order to cause the crumple deformation to occur in the compact mode as described above, it is necessary to configure the impact-absorbing member 10 so as to be more likely to dent inwardly, for example, in the region where the distance from the one longitudinal end portion 14 is in the range of 0 to L/2 and in the region where the distance from the one longitudinal end portion 14 is in the range of L to 3L/2, and configure the impact-absorbing member 10 so as to be more likely to extend outwardly, for example, in the region where the distance is in the range of L/2 to L, and in the region where the distance is in the range of 3L/2 to 2L.

The present inventors found that, in order to cause the crumple deformation to occur in the compact mode, it is more difficult to cause the impact-absorbing member 10 to appropriately deform in an inwardly denting manner, as compared with deformation in an outwardly expanding manner. In other words, by configuring the impact-absorbing member 10 to dent inwardly at an appropriate position, it is possible to cause the impact-absorbing member to appropriately deform in an outwardly expanding manner.

In view of the facts described above, in this embodiment, the laser thermal treatment is not applied, for example, to the region where the distance from the one longitudinal end portion 14 is in the range of 0 to L/2 or the region where the distance is in the range of L to 3L/2, in other words, is not applied to the region that dents inwardly when the crumple deformation occurs in the compact mode. On the other hand, the laser thermal treatment is applied, for example, to the region where the distance from the longitudinal end portion 14 is in the range of L/2 to L, and the region where the distance is in the range of 3L/2 to 2L, in other words, is applied to the region that expands outwardly when the crumple deformation occurs in the compact mode.

Since the laser thermal treatment is not applied to the region that deforms in the inwardly denting manner, the strength of the impact-absorbing member 10 is not enhanced in this region. This makes it relatively easy to deform in the inwardly denting manner, which makes it possible to cause the impact-absorbing member 10 to appropriately crumple and deform in the compact mode. On the other hand, since the laser thermal treatment is applied to the region that deforms in the outwardly expanding manner, the strength of the impact-absorbing member 10 is enhanced in this region. Thus, this region of the impact-absorbing member 10 absorbs greater impact energy.

Thus, according to this embodiment, by appropriately selecting the portion for the laser thermal treatment, it is possible to cause the impact-absorbing member 10 to crumple and deform in the compact mode when the impact energy is applied to the impact-absorbing member 10 while causing the region that deforms in the externally expanding manner to absorb the large impact energy. Thus, according to this embodiment, it is possible to absorb the large impact energy while reducing the area to which the laser thermal treatment is applied.

The laser thermal treatment is applied to the untreated impact-absorbing member 10 in a manner such that a target point of the laser light is moved in the longitudinal direction. With this application, the laser thermal treatment is applied in a straight manner in the longitudinal direction of the impact-absorbing member 10. Further, the number of lines of the laser light application to each of the corner portions 13 and 17 may be set to any number, provided that at least one line is formed. In the case where the width P (more specifically, the length in a direction perpendicular to the longitudinal direction) of the first thermally treated portion A formed by application of the thermal treatment with a laser light is wide as illustrated, for example, in the hatched lines in FIG. 1, emission of the laser light is formed by a plurality lines (three lines in the illustrated example) as illustrated in FIG. 5.

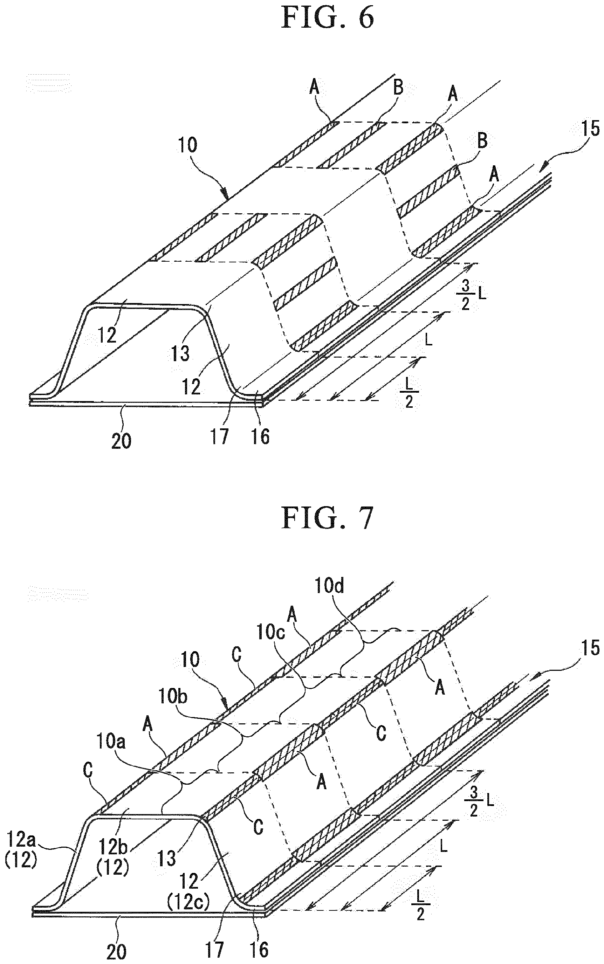

According to the present invention, various modifications may be possible to this embodiment. For example, in this embodiment, the laser thermal treatment is applied only to the corner portions 13 and 17. However, the laser thermal treatment is not limited to the corner portion 13 or 17, and, as illustrated in FIG. 6, may be applied to the flat portions 12 and 16 (hatched portion B) in addition to the corner portions 13 and 17 (hatched portion A), or may be applied only to the flat portions 12 and 16 without being applied to the corner portion 13 or 17.

Further, in this embodiment, the thermal treatment with the laser light is not applied to the partial structural member 10a, 10c (second field) of the partial tubular body 11. In other words, the thermal treatment with the laser light is applied only to the partial structural members 10b, 10d (first field) of the partial tubular body 11. However, the laser thermal treatment may be applied to the first thermally treated portion A of the impact-absorbing member 10 that satisfies the following Expression (2). In this case, it is preferable that, as illustrated, for example, in FIG. 7, the ratio of a first thermally treated area of the first thermally treated portion (hatched portion) A subjected to the thermal treatment with the laser light relative to the entire outer peripheral area of the partial structural member 10b of the impact-absorbing member 10 that satisfies Expression (1) described above is higher than the ratio of a second thermally treated area of a second thermally treated portion (hatched portion) C subjected to the thermal treatment with the laser light relative to the entire outer peripheral area of the partial structural member 10a of the impact-absorbing member 10 that satisfies Expression (2).

$$(a\text{-}1)L \leq X \leq (a\text{-}1/2)L \cdots \text{Expression (2)}$$

In this embodiment, the laser thermal treatment is not applied to the additional structural member 20 having a plate-like shape. However, the thermal treatment may be applied to the additional structural member 20 having a plate-like shape in a similar manner. In this case, the laser thermal treatment is applied in the longitudinal direction of the additional structural member 20 in a manner such that a ratio of an external surface area subjected to the laser thermal treatment relative to the entire outer peripheral area of a region of the additional structural member 20 located in a longitudinal distance X of between (a - 1/2)L and aL from the one longitudinal end portion 14 of the additional structural member 20 is higher than the ratio of an external surface area subjected to the laser thermal treatment relative to the entire outer peripheral area of a portion of the additional structural member 20 located in the distance X of between (a - 1)L and (a - 1/2)L. In this specification, the entire outer peripheral area represents an area of a surface of the additional structural member 20, the surface being on an opposite side to the impact-absorbing member 10.

Further, as illustrated in FIG. 1, it may be possible to form a crumple bead (fragile portion) 19 having a strength weaker than the surrounding portions and located away from the one longitudinal end portion 14 of the impact-absorbing member 10 in the longitudinal direction by a distance X that satisfies the following Expression (3). The crumple bead 19 is formed so as to extend in the circumferential direction of the impact-absorbing member 10 (in other words, in a direction perpendicular to the longitudinal direction of the impact-absorbing member 10).

The crumple bead 19 is a bead formed so as to facilitate deformation in a form that it dents inwardly around a position located at a distance X that satisfies the following Expression (3) when an impact energy in the longitudinal direction is applied to the impact-absorbing member 10. For example, the crumple bead 19 is formed into a concaved portion that curves toward the inside of the impact-absorbing member 10.

$$X = (a - 3/4)L \cdots \text{Expression (3)}$$

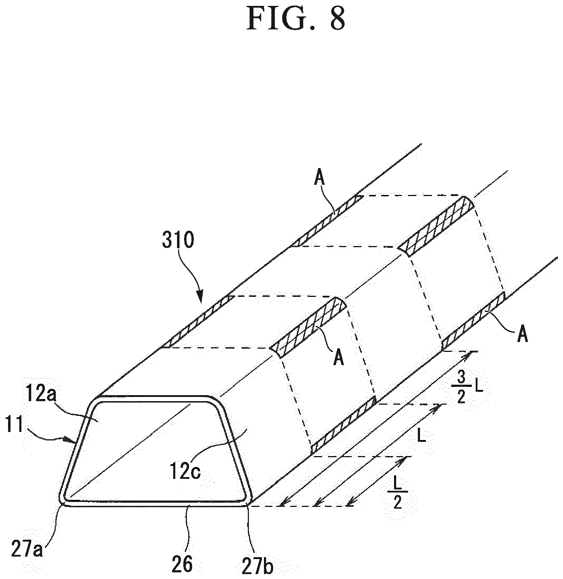

Further, in this embodiment, the impact-absorbing member 10 includes a partial tubular body having a polygonal cross-sectional shape with one side being opened. However, in a similar manner, it may be possible to apply the thermal treatment with the laser light to an impact-absorbing member 310 having a polygonal cross-sectional shape in which the cross-sectional shape is closed (close cross section) as illustrated in FIG. 8. More specifically, in addition to the partial tubular body 11 in this embodiment, the impact-absorbing member 310 includes a flat portion 26 that closes the opened side of the polygonal cross-sectional shape of the partial tubular body 11, a corner portion 27a provided between the flat portion 26 and the flat portion 12a constituting the partial tubular body 11, and a corner portion 27b provided between the flat portion 26 and the flat portion 12c constituting the partial tubular body 11. The thermal treatment with the laser light is applied to the impact-absorbing member 310 in a similar manner to that to the impact-absorbing member 10 described above. For example, for the impact-absorbing member 310, the laser thermal treatment is applied to the first thermally treated portion A as illustrated in hatched portions in FIG. 8.

Further, in this embodiment, the impact-absorbing member has a cross-sectional shape in which its shape remains almost unchanged in the longitudinal direction. However, it may be possible that the impact-absorbing member does not have the cross-sectional shape in which its shape remains almost unchanged in the longitudinal direction. For example, this embodiment may be applied to an impact-absorbing member having a cross-sectional shape gradually increasing from the one longitudinal end portion 14, in other words, a cross-sectional shape expanding outwardly with distance from the longitudinal end portion 14. Further, this embodiment may be applied to an impact-absorbing member having a cross-sectional shape gradually reducing its size from the one longitudinal end portion 14, in other words, a cross-sectional shape contracting inwardly with distance from the longitudinal end portion 14.

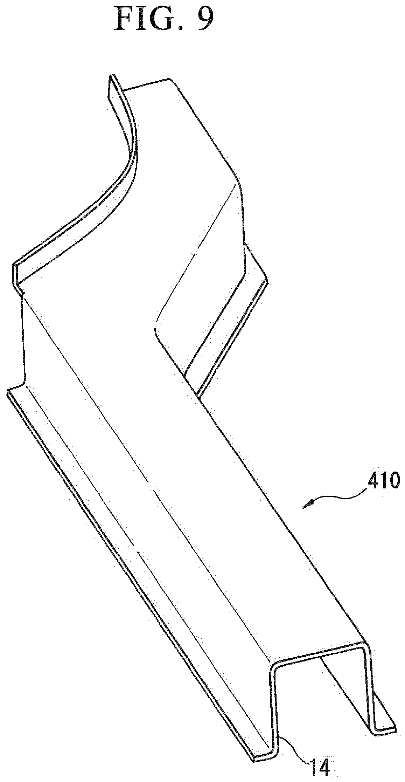

Further, it is only necessary that the impact-absorbing member 10 has the above-described shapes only in the region on the side of the one longitudinal end portion 14. In regions other than the region on the side of the the one longitudinal end portion 14, an impact-absorbing member 410 may have any shape such as an example shape illustrated in FIG. 9.

Yet further, in this embodiment, the thermal treatment with the laser light is applied to the plural corner portions 13a, 13b and 17. However, it is only necessary that the thermal treatment with the laser light is applied to at least one of the corner portions.

[Second Embodiment]

Next, a second embodiment of the the present invention will be described.

FIG. 4 illustrates a deformation mode in which the one longitudinal end portion 14 of the impact-absorbing member 10, in other words, the longitudinal end portion 14 of the structural-member assembled body 1 is fixed to any other member. However, in the case where the one longitudinal end portion 14 of the impact-absorbing member 10 is not fixed to any other member but is formed as a free end, the impact-absorbing member 10 deforms in a different compact mode. FIG. 10 illustrates this deformation mode.

As can be understood from FIG. 10, when the one longitudinal end portion 14 of the impact-absorbing member 10 is formed as the free end and the impact-absorbing member 10 deforms in the compact mode, the impact-absorbing member 10 expands outwardly in the region where the distance X from the one longitudinal end portion 14 is between 0 and L/4, and the impact-absorbing member 10 deforms inwardly in the region where the distance X is between L/4 and 3L/4. Further, the impact-absorbing member 10 expands outwardly in the region where the distance X is between 3L/4 and 5L/4, and the impact-absorbing member dents inwardly in the region where the distance X is between 5L/4 and 7L/4. Thereafter, expansion and dent are repeated in a similar manner in the cycle L.

In this embodiment, when a is an integer with a value of one or more, and X is a distance in the longitudinal direction from the longitudinal end portion 14, the thermal treatment with the laser light is at least applied to a third thermally treated portion D of the partial tubular body 11 located in a distance X, which satisfies the following Expression (4).

$$(a - 1/4)L \le X \le (a + 1/4)L \cdots \text{Expression (4)}$$

In other words, the laser thermal treatment is applied to the outer peripheral surface, which satisfies Expression (4) described above, of the corner portions 13 and 17 of the impact-absorbing member 510. Thus, the laser thermal treatment is not applied to the region other than the corner portions 13, 17, in other words, is not applied to the flat portions 12, 16. Further, the laser thermal treatment is not applied to the corner portion 13 or 17 in a region of the impact-absorbing member 510 located in the longitudinal distance X of between (a - 3/4)L and (a - 1/4)L.

In other words, as illustrated in FIG. 11, the impact-absorbing member 510 is separated once at L/4 from the one longitudinal end portion 14 along the longitudinal direction (extending direction), and the rest of the portion of the impact-absorbing member 510 is separated into plural portions at L/2 intervals. The separated portions of the impact-absorbing member 510 are denoted sequentially by partial structural members 510a, 510b, 510c, 510d, ... from the one longitudinal end portion 14 side, and the laser thermal treatment is applied to the corner portions 13 and 17 of the partial structural members 510a and 510c (third field). The laser thermal treatment is not applied to the flat portion 12, 16 of the partial structural members 510a and 510c of the impact-absorbing member 10, or the corner portion 13, 17 or the flat portion 12, 16 of the partial structural members 510b and 510d (fourth thermally treated portion) of the impact-absorbing member 10.

In this embodiment, various modifications may be possible as in the first embodiment. For example, the laser thermal treatment may be also applied to the region of the impact-absorbing member 510 that satisfies the following Expression (5). However, in this case, the laser thermal treatment is applied, for example, in a manner such that a ratio of the first thermally treated area of a third thermally treated portion (hatched portion) D subjected to the thermal treatment with the laser light relative to the entire outer peripheral area of the partial structural member 510c of the impact-absorbing member 510 that satisfies Expression (4) above is higher than the ratio of a fourth thermally treated area of the fourth thermally treated portion (not illustrated) subjected to the thermal treatment with the laser light relative to the entire outer peripheral area of the impact-absorbing member 510b of the impact-absorbing member 510 that satisfies Expression (5) below.

$$(a - 3/4)L \le X \le (a - 1/4)L \cdots \text{Expression (5)}$$

Further, in this embodiment, the crumple bead 19 is formed at a position located at a distance X, which satisfies the following Expression (6), in the longitudinal direction from the one longitudinal end portion 14 of the impact-absorbing member 510.

$$X = (a - 1/2)L \cdots \text{Expression (6)}$$

Examples

[Comparative Example 1]

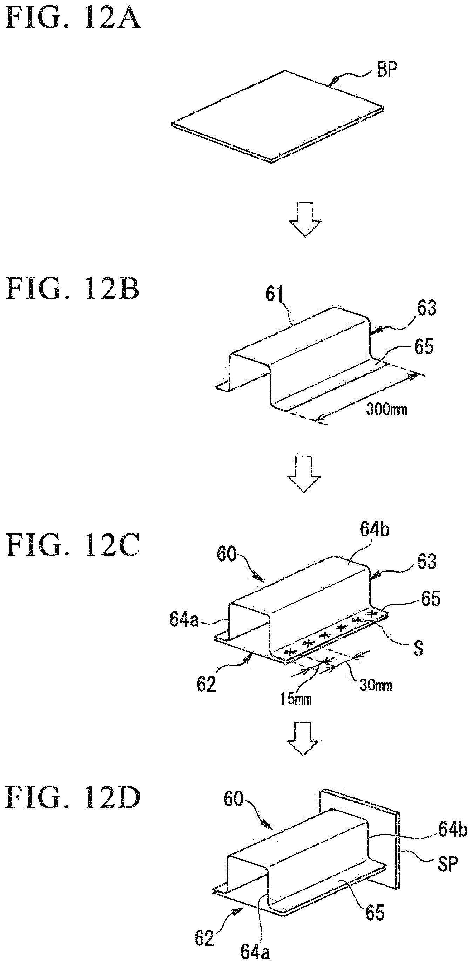

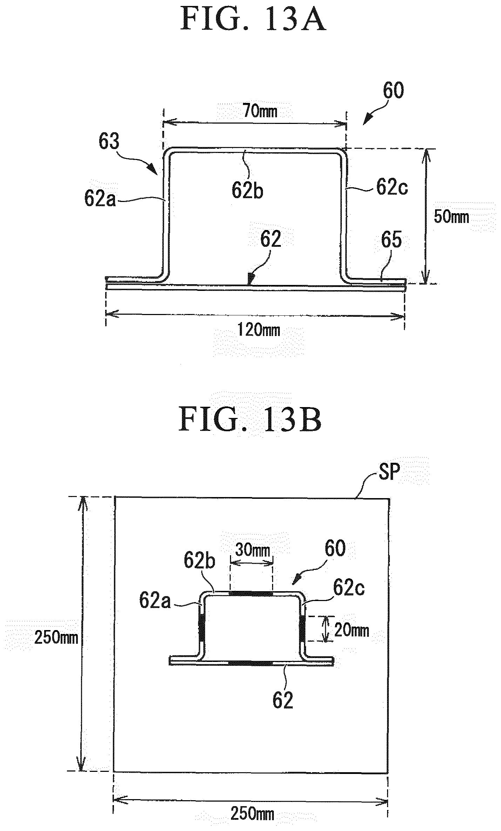

An impact-absorbing member 63 of Comparative Example 1 is a steel sheet BP with a 780MPa class as illustrated FIG. 12A. This steel sheet BP has a thickness of 1.6mm, a yield stress of 493 MPa, a tensile strength of 844 MPa, an elongation of 27%, the amount of carbon contained of 0.19%, the amount of silicon contained of 1.20%, and the amount of manganese contained of 1.84%. The steel sheet BP was bent to produce the untreated impact-absorbing member 63 having the shape as illustrated in FIG. 12B. The untreated impact-absorbing member 63 includes a partial tubular portion 61 having a quadrilateral cross section with one side being opened. Side lengths of a vertical section formed by three flat portions constituting the partial tubular body 61 were set such that, as illustrated in FIG. 13A, the length of a flat portion 62a was 50 mm, the length of a flat portion 62b was 70 mm, the length of a flat portion 62c was 50 mm, and the length of the opened side of the impact-absorbing member 63 was 70 mm. Thus, the average side length L of the untreated impact-absorbing member 63 was 60 mm. Further, the length in which the partial tubular body 61 extends was set to 300 mm.

A flange portion 65 of the untreated impact-absorbing member 63 produced as described above was spot welded to an additional structural member 62 having a plate-like shape to form a structural-member assembled body 60 as illustrated in FIG. 12C. The spot welding S was applied to the widthwise center of the flat portions constituting the flange portion 65 at 30 mm intervals in the longitudinal direction. Further, a distance from the end portion 64a (end portion where impact is to be applied, hereinafter, referred to as "end portion on the impact application side") to the first spot welding in the longitudinal direction was set to 15 mm. Accordingly, ten spot weldings were applied to each of the flange portions 65 (only six weldings are illustrated in FIG. 12C).

The other end portion 64b (end portion located on the opposite side to the side having impact to be applied, and hereinafter, referred to as "end portion on the impact not-application side") of the structural-member assembled body 1 produced as described above was MIG welded to the steel sheet SP having a thickness of 1.6 mm and a side length of 250 mm. The structural-member assembled body 60 and the steel sheet SP were not welded at the entire end surface of the structural-member assembled body 1, but were welded at the vicinity of the center of each side constituting the above-described quadrilateral cross section among the end surfaces of the structural-member assembled body 60. For the flat portions 62a and 62c having a side length of 50 mm, MIG welding of 20 mm was applied at the center of the end surface of the flat portions 62a and 62c. For the additional structural member 20 and the flat portion 62b having a side length of 70 mm, MIG welding of 30 mm was applied to the center of the end surface of the flat portion 62b, and MIG welding of 30 mm was applied to the center of the end surface of the additional structural member (blackened portion in FIG. 13B illustrating a side view of the structural-member assembly body in FIG. 12D).

Further, in this Comparative Example 1, a steel sheet was MIG welded to the end portion on the impact application side of the structural-member assembled body 60 in a similar manner.

The structural-member assembled body 60 produced as described above was placed in a manner such that the longitudinal direction of the structural-member assembled body 60 was the vertical direction, and the end portion on the impact application side of the structural-member assembled body 60 faced upwards. Then, an impact test was performed such that a falling weight of 300 kg located above the end portion on the impact application side of the structural-member assembly body 60 was caused to fall from a height of 2 m. At this time, the energy inputted to the structural-member assembled body 60 by the falling weight was 5880 J.

At the time of the impact test, a load measuring unit (load cell) was placed immediately below the structural-member assembled body 60 to measure a load history after the falling weight was brought into contact with the structural-member assembled body 60. At the same time, the displacement history (time history of the amount of descent of the falling weight after the falling weight was brought into contact with the structural-member assembled body 1) of the falling weight after the falling weight was brought into contact with the structural-member assembled body 60 was measured with a laser displacement meter. On the basis of the load history and the displacement history measured as described above, the absorbing energy of the structural-member assembled body 1 was calculated by integrating a load-displacement curve from the time when the falling weight was brought into contact with the structural-member assembled body 60 to the time when the falling weight was displaced downward in the vertical direction by 50 mm. The absorbing energy at this time was 4296 J.

[Example 1]

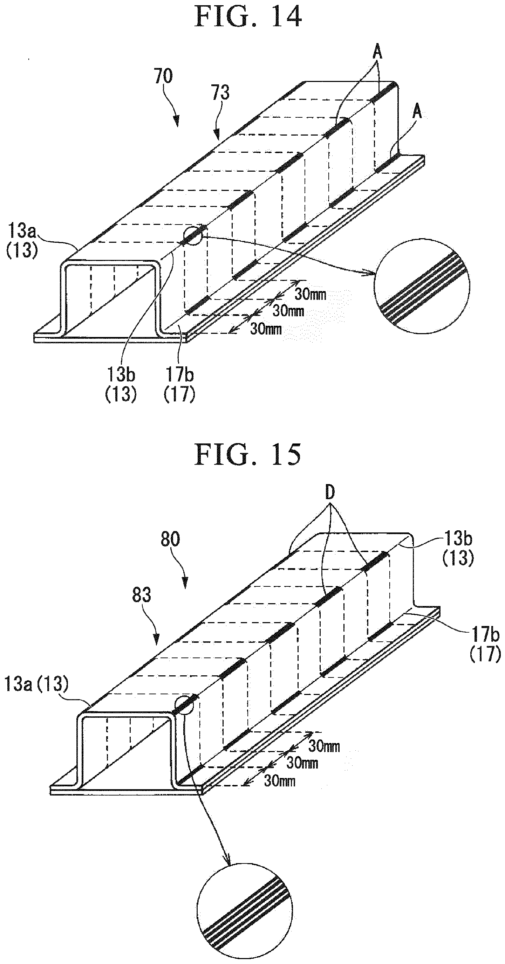

A laser thermal treatment with a carbon dioxide laser was applied to the impact-absorbing member 63 of Comparative Example 1 described above. The laser output was set to 5 kW, and the thermal treatment rate was set to 15 m/min. The laser output and the thermal treatment rate in the laser thermal treatment were not changed throughout Examples and Comparative Examples below. In this Example, the laser thermal treatment was applied to portions illustrated as the first thermally treated portion A in FIG. 14, in other words, was applied to each of the corner portions 13 and 17 of the impact-absorbing member 73 located in the longitudinal distance X of between (a - 1/2)L and aL. More specifically, five lines of the laser thermal treatment were applied to each of the corner portions 13 and 17 in a manner such that these lines extend in the straight manner in the longitudinal direction.

Vickers hardness was measured at portions where the laser thermal treatment was applied. The Vickers hardness of the untreated impact-absorbing member was 230, while the Vickers hardness at the impact-absorbing member after the laser thermal treatment was 468, which confirms that quench hardening was sufficiently performed.

The impact test was performed to the structural-member assembled body 70 produced as described above, in a similar manner to that in Comparative Example 1. As a result, the absorbing energy was 5063 J.

[Comparative Example 2]

For the impact-absorbing member of Comparative Example 1 described above, a laser thermal treatment was applied to portions illustrated as the second thermally treated portion C in FIG. 15, more specifically, was applied to each of the corner portions 13 and 17 of the impact-absorbing member 83 located in the longitudinal distance X of between (a - 1)L and (a - 1/2)L. More specifically, five straight lines of the laser thermal treatment were applied to each of the corner portions 13 and 17 in a manner such that these lines extend in the longitudinal direction. The impact test was performed to the structural-member assembled body 80 produced as described above. As a result, the absorbing energy was 2799 J.

[Example 2]

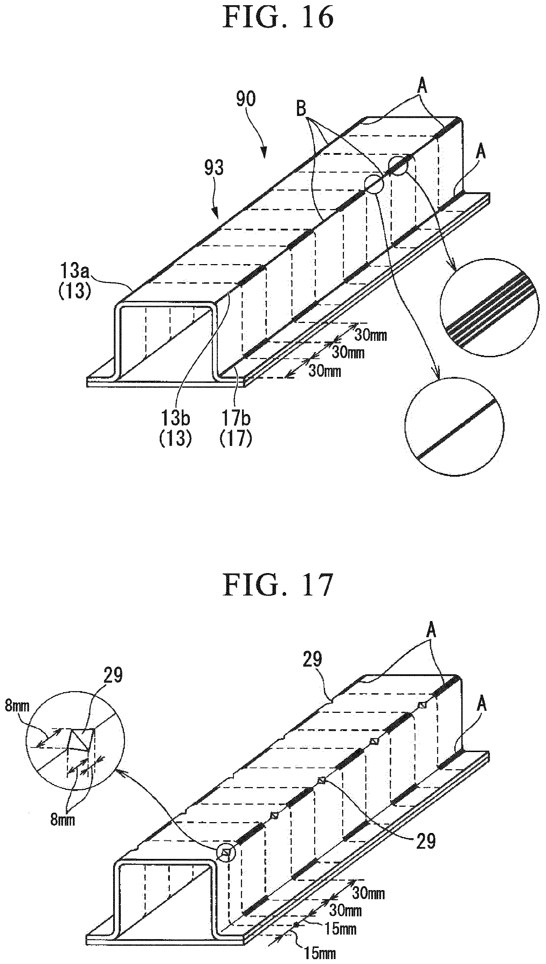

For the impact-absorbing member 63 of Comparative Example 1, a laser thermal treatment was applied from an end 94a to an end 94b of each of the corner portions 13 and 17 in a manner such that one straight line of the laser thermal treatment extends in the longitudinal direction. In addition, a laser thermal treatment was applied to each of the corner portions 13 and 17 of the impact-absorbing member 93 located in the longitudinal distance X of between (a - 1/2)L and aL in a manner such that two straight lines of the laser thermal treatment extend in the longitudinal direction on both sides of the one straight line of laser-thermally treated portion.
In other words, five straight lines of the laser thermal treatment extending in the longitudinal direction were applied to portions illustrated as the first thermally treated portion A in FIG. 16, more specifically, were applied to each of the corner portions 13 and 17 of the impact-absorbing member 93 located in the longitudinal distance X of between (a - 1/2)L and aL, and one straight line of the laser thermal treatment extending in the longitudinal direction was applied to portions illustrated as a second thermally treated portion B in FIG. 16, more specifically, was applied to each of the corner portions 13 and 17 of the impact-absorbing member 93 located in the longitudinal distance X of between (a - 1)L and (a - 1/2)L. The impact test was performed to the structural-member assembled body 90 produced as described above. As a result, the absorbing energy was 5334 J.

[Comparative Example 3]

In a similar manner to that in Example 2 described above, for the impact-absorbing member 63 of Comparative Example 1 described above, one straight line of the laser thermal treatment was applied to each of the corner portions so as to extend in the longitudinal direction from end to end. In addition, the laser thermal treatment was applied to each of the corner portions of the impact-absorbing member located in the longitudinal distance X of between (a - 1)L and (a - 1/2)L in a manner such that two straight lines of the laser thermal treatment extend in the longitudinal direction on both sides of the one straight line of the laser-thermally treated portion.
In other words, in Comparative Example 3, five straight lines of the laser thermal treatment extending in the longitudinal direction were applied to each of the corner portions of the impact-absorbing member located in the longitudinal distance X of between (a - 1)L and (a - 1/2)L, and one straight line of the laser thermal treatment extending in the longitudinal direction was applied to each of the corner portions of the impact-absorbing member located in the longitudinal distance X of between (a - 1/2)L and aL. The impact test was performed to the structural-member assembled body produced as described above. As a result, the absorbing energy was 2585 J.

[Example 3]

For the impact-absorbing member 73 of Example 1 described above, a crumple bead 29 was formed at the X of (a - 3/4)L. As illustrated in FIG 17, the crumple bead 29 had an inwardly dented shape, and was formed at the corner portion having an outwardly raised shape. The impact test was performed to the structural-member assembled body 1 produced as described above. As a result, the absorbing energy was 4988 J.

[Comparative Example 4]

In Comparative Example 1 described above, a steel sheet was MIG welded to the end portion on the impact application side of the structural-member assembled body 60. In Comparative Example 4 the steel sheet was not welded to the end portion on the impact application side of the structural-member assembled body 60, and was formed as the free end. The impact test was performed to the structural-member assembled body produced as described above. As a result, the absorbing energy was 4280 J.

[Example 4]

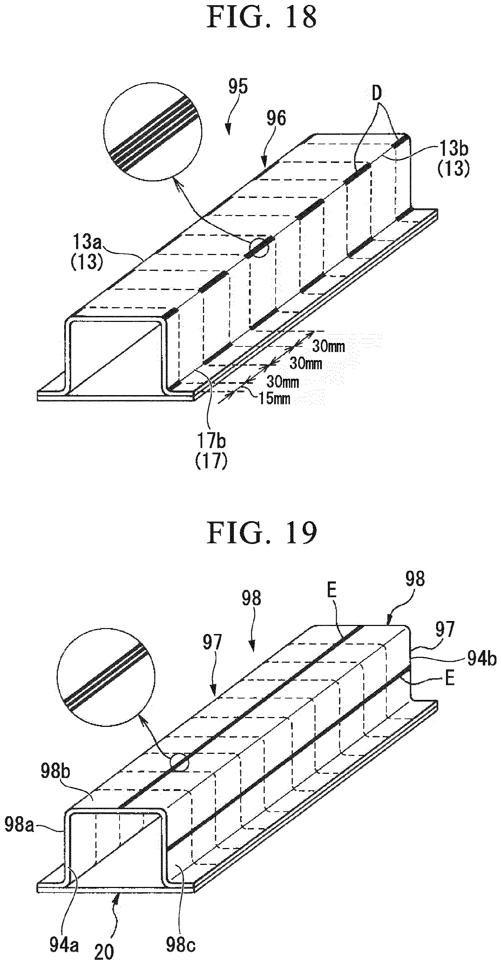

A laser thermal treatment was applied to the impact-absorbing member of Comparative Example 4 described above. The laser thermal treatment was applied to portions illustrated as the third thermally treated portion D in FIG. 18, more specifically, was applied to each of the corner portions 13 and 17 of the impact-absorbing member 96 located in the longitudinal distance X of between (a - 1/4)L to (a + 1/4)L. In other words, five straight lines of laser thermal treatment extending in the longitudinal direction were applied to each of the corner portions 13 and 17. The impact test was performed to the structural-member assembled body 95 produced as described above. As a result, the absorbing energy was 5051 J.

[Comparative Example 5]

For the impact-absorbing member of Comparative Example 4 described above, the laser thermal treatment was applied to each of the corner portions of the impact-absorbing member located in the longitudinal distance X of between (a - 3/4)L and (a - 1/4)L. In other words, five straight lines of the thermal treatment extending in the longitudinal direction were applied to each of the corner portions. The impact test was performed to the structural-member assembled body produced as described above. As a result, the absorbing energy was 2811 J.

[Example 5]

For the impact-absorbing member of Comparative Example 4 described above, one straight line of the laser thermal treatment was applied to each of the corner portions so as to extend in the longitudinal direction from end to end. In addition, the laser thermal treatment was applied to each of the corner portions of the impact-absorbing member located in the longitudinal distance X of between (a - 1/4)L and (a + 1/4)L in a manner such that two straight lines of the laser thermal treatment extend in the longitudinal direction on both sides of the one straight line of the laser-thermally treated portion. More specifically, in Example 5, five straight lines of the thermal treatment extending in the longitudinal direction were applied to each of the corner portions of the impact-absorbing member located in the longitudinal distance X of between (a - 1/4)L and (a + 1/4)L, and one straight line of the thermal treatment extending in the longitudinal direction was applied to each of the corner portions of the impact-absorbing member located in the longitudinal distance X of between (a - 3/4)L and (a - 1/4)L. The impact test was performed to the structural-member assembled body produced as described above. As a result, the absorbing energy was 5317 J.

[Comparative Example 6]

As is the case with Example 5 described above, one straight line of the laser thermal treatment was applied to each of the corner portions of the impact-absorbing member of Comparative Example 4 described above so as to extend in the longitudinal direction from end to end. In addition, the laser thermal treatment was applied to each of the corner portions of the impact-absorbing member located in the longitudinal distance X of between (a - 3/4)L and (a - 1/4)L in a manner such that two straight lines of the laser thermal treatment extend in the longitudinal direction on both sides of the one straight line of the laser-thermally treated portion. More specifically, in Comparative Example 6, five straight lines of the laser thermal treatment extending in the longitudinal direction were applied to each of the corner portions of the impact-absorbing member located in the longitudinal distance X of between (a - 3/4)L and (a - 1/4)L, and one straight line of the thermal treatment extending in the longitudinal direction was applied to each of the corner portions of the impact-absorbing member located in the longitudinal distance X of between (a - 1/4)L and (a + 1/4)L. The impact test was performed to the impact-absorbing member produced as described above. As a result, the absorbing energy was 2566 J.

[Example 6]

For the impact-absorbing member of Example 4 described above, the crumple bead 19 was formed at X of (a - 1/2)L. The crumple bead 19 had an inwardly dented shape, and was formed at the corner portion having an outwardly raise shape in a similar manner to that in Example 3. The impact test was performed to the structural-member assembled body 1 produced as described above. As a result, the absorbing energy was 5058 J.

[Comparative Example 7]

For the impact-absorbing member 63 of Comparative Example 1 described above, three straight lines of the laser thermal treatment were applied to portions illustrated as a thermally treated portion E in FIG. 19, more specifically, were applied to the widthwise center of each of the flat portions 98a, 98b and 98c constituting the partial tubular body 97 of the impact-absorbing member 98 in a manner such that the three straight line of the laser thermal treatment extend in the longitudinal direction from the end 94a to the end 94b. The impact test was performed to the structural-member assembled body produced as described above. As a result, the absorbing energy was 4692 J.

[Example 7]

For the impact-absorbing member of Example 1 described above, an additional laser thermal treatment was applied to portions similar to those in Comparative Example 7. Thus, in Example 7, the laser thermal treatment was applied to widthwise center of each of the flat portions constituting the partial tubular body 11, and each of the corner portions of the impact-absorbing member located in the longitudinal distance X of between (a - 1/2)L and aL. In other words, three straight lines of the thermal treatment were applied to the widthwise center of each of the flat portions so as to extend in the longitudinal direction from end to end, and five straight lines of the laser thermal treatment were applied to each of the corner portions so as to extend in the longitudinal direction. The impact test was performed to the structural-member assembled body 1 produced as described above. As a result, the absorbing energy was 5367 J.

[Example 8]

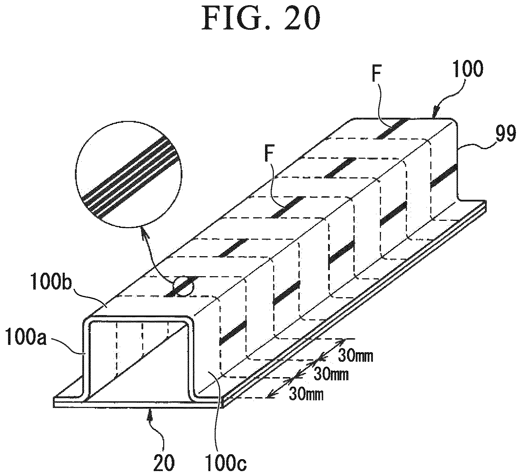

For the impact-absorbing member of Comparative Example 1 described above, the laser thermal treatment was applied to portions illustrated in FIG. 20, more specifically, was applied to portions located in the longitudinal distance X of between (a - 1/2)L and aL and at the widthwise center of each of the flat portions 100a, 100b, and 100c constituting the partial tubular body 99 of the impact-absorbing member 100. In other words, five straight lines of the laser thermal treatment were applied to the widthwise center of each of the flat portions 100a, 100b and 100c so as to extend in the longitudinal direction. The impact test was performed to the structural-member assembled body 1 produced as described above. As a result, the absorbing energy was 4876 J.

[Comparative Example 8]

For the impact-absorbing member of Comparative Example 1 described above, the laser thermal treatment was applied to portions located in the longitudinal distance X of between (a - 1)L and (a - 1/2)L and at the widthwise center of each of the flat portions constituting the partial tubular body 11 of the impact-absorbing member. More specifically, five straight lines of laser thermal treatment were applied to the widthwise center of each of the flat portions so as to extend in the longitudinal direction. The impact test was performed on the structural-member assembled body 1 produced as described above. As a result, the absorbing energy was 4852 J.

Table I provides a summary of the results described above.

[Table 1]

| | Test condition | | Absorbing energy [J] |
|---|---|---|---|
| | Thermal treatment or other treatment | Longitudinal end portion | |
| Comparative Example 1 | - | Fixed end | 4296 |
| Example 1 | Corner portion satisfying X = (a - 1/2)L to aL | | 5063 |
| Comparative Example 2 | Corner portion satisfying X = (a - 1)L to (a - 1/2)L | | 2799 |
| Example 2 | All corner portions (more treatment is applied to X = (a - 1/2)L to aL) | | 5334 |
| Comparative Example 3 | All corner portions (more treatment is applied to X = (a - 1)L to (a - 1/2)L) | | 2585 |
| Example 3 | Crumple bead is added to Example 1 | | 4988 |

(continued)

| | Test condition | | Absorbing energy [J] |
|---|---|---|---|
| | Thermal treatment or other treatment | Longitudinal end portion | |
| Comparative Example 4 | - | Free end | 4280 |
| Example 4 | Corner portion satisfying X = (a - 1/4)L to (a + 1/4)L | | 5051 |
| Comparative Example 5 | Corner portion satisfying X = (a - 3/4)L to (a - 1/4)L | | 2811 |
| Example 5 | All corner portions (more treatment is applied to X = (a - 1/4) L to (a + 1/4)L) | | 5317 |
| Comparative Example 6 | All corner portions (more treatment is applied to X = (a - 3/4) L to (a - 1/4)L) | | 2566 |
| Example 6 | Crumple bead is added to Example 4 | | 5058 |
| Comparative Example 7 | Applied to flat portion in addition to Comparative Example 1 | Fixed end | 4692 |
| Example 7 | Applied to flat portion in addition to Example 1 | | 5367 |
| Example 8 | Flat portion satisfying X = (a - 1/2)L to aL | | 4876 |
| Comparative Example 8 | Flat portion satisfying X = (a - 1)L to (a - 1/2)L | | 4852 |

From Table 1, it can be understood that, in the case where the steel sheet is welded to the end portion on the impact application side, in other words, in the case where the end portion on the impact application side is the fixed end, the impact-absorbing member having the laser thermal treatment applied only to the portions thereof located in the longitudinal distance X of between (a - 1/2)L and aL exhibits enhanced absorbing energy at the time of reception of the impact, as compared with the impact-absorbing member having the laser thermal treatment applied only to the portions thereof located in the longitudinal distance X of between (a - 1)L and (a - 1/2)L (Example 1 and Comparative Example 2). Further, in this case, the impact-absorbing member having increased ratio of the laser thermal treatment applied to the portions located in the longitudinal distance X of between (a - 1/2)L and aL exhibits enhanced absorbing energy at the time of reception of the impact, as compared with the impact-absorbing member having increased ratio of the laser thermal treatment applied to the portions located in the longitudinal distance X of between (a - 1)L and (a - 1/2)L (Example 2 and Comparative Example 3).

Further, it can also be understood that, in the case where the steel sheet is not welded to the end portion on the impact application side, in other words, in the case where the end portion on the impact application side is the free end, the impact-absorbing member having the laser thermal treatment applied only to the portions located in the longitudinal direction X between (a - 1/4)L and (a + 1/4)L exhibits increased absorbing energy at the time of reception of the impact, as compared with the impact-absorbing member having the laser thermal treatment applied only to the portions located in the longitudinal distance X of between (a - 3/4)L and (a - 1/4)L (Example 4 and Comparative Example 5). Further, in this case, the impact-absorbing member having increased ratio of the laser thermal treatment applied to the portions located in the longitudinal distance X of between (a - 1/4)L and (a + 1/4)L exhibits increased absorbing energy at the time of reception of the impact, as compared with the impact-absorbing member having increased ratio of the laser thermal treatment applied to the portions located in the longitudinal distance X of between (a - 3/4)L and (a - 1/4)L (Example 5 and Comparative Example 6).

Yet further, it can also be understood that the above-described tendency can also be seen in the case where the crumple bead is formed (Examples 3 and 6), and in the case where the laser thermal treatment is applied to the flat portions instead of to the corner portion (Examples 7 and 8, and Comparative Examples 7 and 8).

[Third Embodiment]

Below, a third embodiment of the present invention will be described with reference to the drawings.

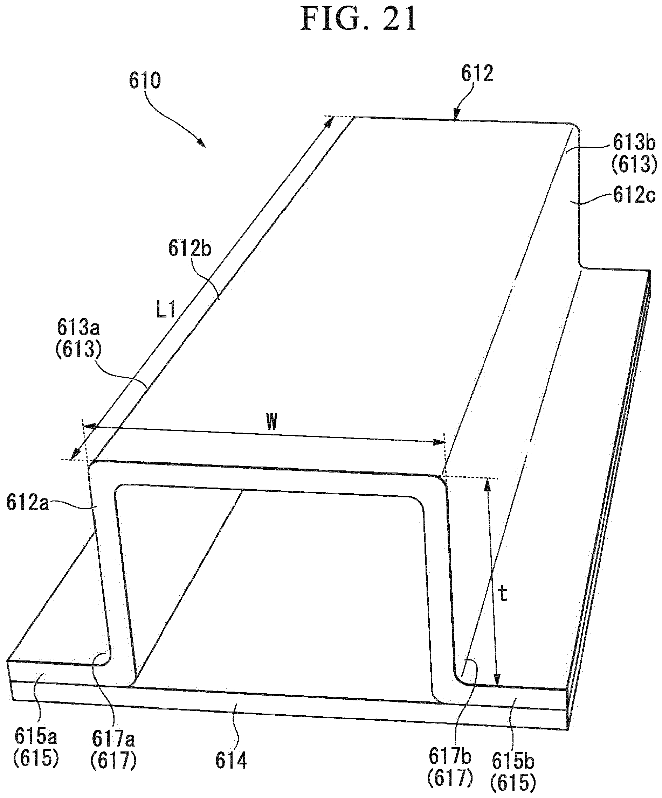

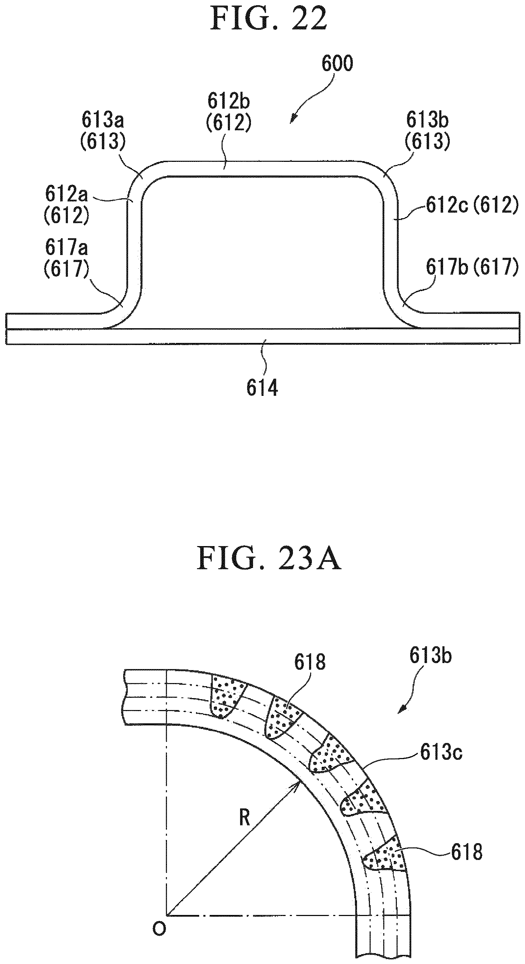

FIG. 21 and FIG. 22 illustrate an impact-absorbing member 610 applicable to a front side member or rear side member of a passenger vehicle as a formed product to which this embodiment of the present invention is to be applied. The impact-absorbing member 610 includes a first steel plate (partial tubular body) 612 and a flange portion 615. The first steel plate 612 is formed through press working or roll forming into a rectangular expanded portion that protrudes upwardly in FIG. 21 and FIG. 22. The flange portion 615 includes flange portions 615a and 615b projecting in the side direction from the first steel plate 612, and is formed into a hat-like cross-sectional shape when viewed on a cross section perpendicular to a direction in which the impact-absorbing member 610 extends.

Further, as illustrated in FIG. 21, a second steel plate (additional structural member) 614 having a plane shape is disposed so as to face the flange portion 615 of the impact-absorbing member 610, and close the opened side in the quadrilateral cross section of the first steel plate 612.

Further, the first steel plate 612 is spot welded at the flange portion 615 to the second steel plate 614.

In this embodiment, the first steel plate 612 includes plural planer flat portions 612a to 612c, and plural corner portions (ridge portions) 613 provided between the flat portions 612a to 612c. In the example illustrated in FIG. 21, the first steel plate 612 includes three flat portions 612a to 612c, and two corner portions 613a and 613b provided between the flat portions 612a to 612c. Further, the flat portion 612a and the flange portion 615 are connected by way of the corner portion 617a, and the flat portion 612c and the flange portion 615 are connected by way of the corner portion 617b.

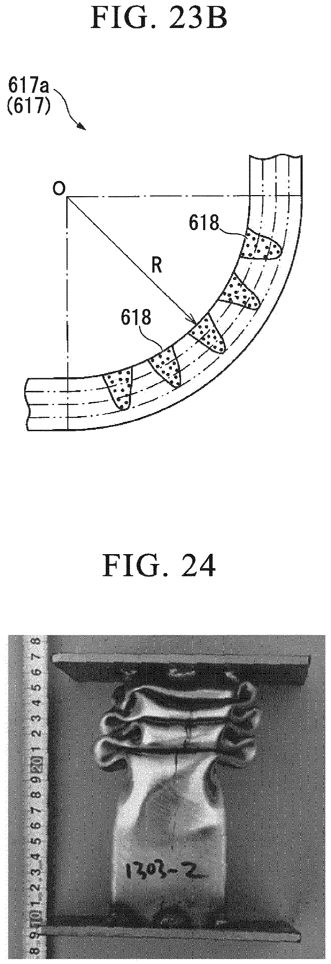

As illustrated in FIG. 23A, a thermally hardened area 618 formed through hardening with a laser light is formed along a direction in which the plural corner portions 613 extend. The thermally hardened area 618 of the impact-absorbing member 610 may be formed along the corner portion 617 in addition to along the corner portion 613. A thermally treated portion formed with the laser light may be formed by one line of a thermally hardened area extending in the longitudinal direction along the corner portion 613 or corner portion 617. Preferably, as illustrated in FIG. 23A and FIG. 23B, plural lines of thermally hardened areas 618 are included. Further, preferably, the intensity of the laser light and the time period for emission of the laser light are set so that the thermally hardened area 618 has a depth of 3/4 the plate thickness from the a surface 613c of the corner portion. Note that the thermally hardened area 618 is defined as an area having a hardness higher than a reference hardness given by the following Expression (7).

$$0.8 \times (884C(1 - 0.3C^2) + 294) \cdots \text{Expression (7)}$$

In this expression, C is the amount of carbon contained (weight %).

Further, in the case where the thermal treated portion includes plural thermally hardened areas 618, one thermally hardened area 618 is first formed, and the next thermally hardened area 618 is formed so as not to be located adjacent to the first formed thermally hardened area. Then, sequentially, the next thermally hardened area 618 is formed in an area that is not adjacent to the second formed thermally hardened area, thereby preventing the thermally hardened area 618 that has already been formed from being annealed.

Next, the results of crumple tests on the impact-absorbing member 610 produced as described above will be described.

As a test material, a steel sheet with a 440 MPa class having a thickness of 1.6 mm was used to form the impact-absorbing member 610 having a hat-like cross-sectional shape as illustrated in FIG. 21 and FIG. 22. The impact-absorbing member 610 has a height t of 50 mm, a width w of 70 mm, and a length L1 of 300 mm.

Table 2 shows material characteristics of the steel sheet used for forming the impact-absorbing member 610.

[Table 2]

| Type of steel | t [mm] | Mechanical characteristics | | | Component | | |
|---|---|---|---|---|---|---|---|
| | | Yield stress [MPa] | Tensile Strength [MPa] | Elongation [%] | C [%] | Si [%] | Mn [%] |
| Steel material with 440 MPa class | 1.6 | 301 | 457 | 39 | 0.09 | 0.02 | 1.27 |

In addition to the corner portion 613, the laser light was emitted along the corner portion 617 to form the thermally hardened area 618 as illustrated in FIG. 23A and FIG. 23B. In this test, the laser light was emitted under the conditions that an output was 5 kW, a processing speed was, in other words, a speed at which a spot of the laser light was moved on the impact-absorbing member 610 was 12 m/min.

Next, Vickers hardness was measured for the thermally treated portions that were hardened with the laser light. As compared with Vickers hardness before hardening of 140, Vickers hardness was 306 after hardening. Thus, quench hardening was sufficiently performed.

Deformation of the impact-absorbing member 610 formed as described above was observed by placing the impact-absorbing member 610 in a position where the longitudinal direction of the impact-absorbing member 610 is in the vertical direction, and falling an impact member (not illustrated) from above the impact-absorbing member 610 to bring the impact member into collision with the upper end of the impact-absorbing member 610. More specifically, a falling weight of 300 kg fell from a height of 2 m to bring the falling weight into collision with the upper end of the structural member (the energy applied to the structural body by the falling weight at this time was 5.88 kJ), and the deformation of the structural member was observed. Then, the absorbing energy was calculated as an evaluation value of the impact-absorbing ability by integrating a load-displacement curve from a time when the falling weight is brought into contact with the structural member to a time when the structural member deforms 30 mm. Note that the tests were performed with the number of sampling (N number) of 15, and the reproducibility was evaluated.

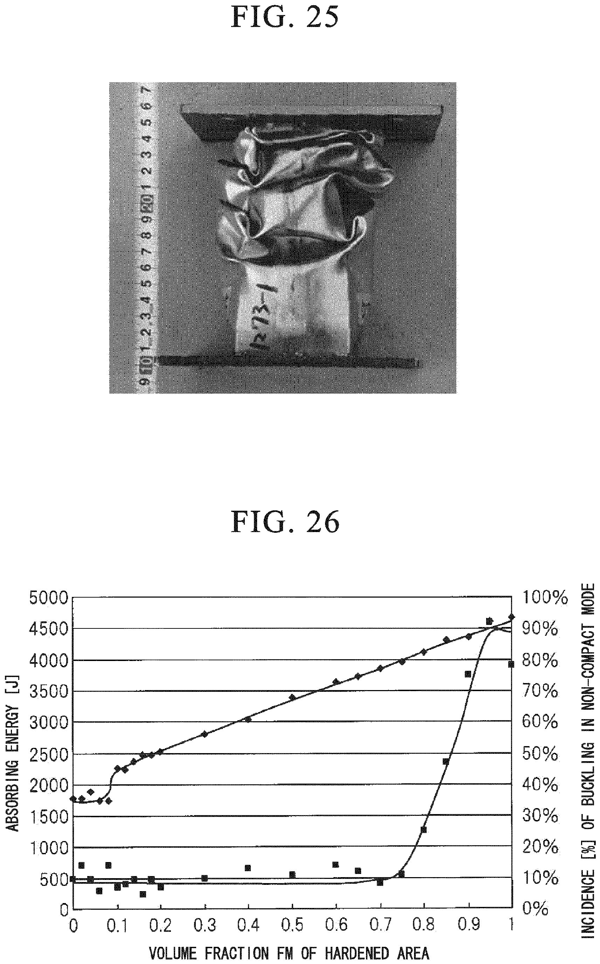

FIG. 24 and FIG. 25 are photographs showing deformation of the impact-absorbing member 610 caused by the impact test. In FIG. 4, local folding does not occur in the impact-absorbing member 610, and the the impact-absorbing member 610 deforms in a manner such that ridges and grooves are regularly formed on the entire impact-absorbing member 610. This type of crumple is called the compact mode. On the other hand, in the impact-absorbing member 610 shown in FIG. 25, as folding occurs locally, the buckled portion contains a flat portion that does not contribute to deformation. This type of deformation is called the non-compact mode. In the non-compact mode, a straight portion does not contribute to deformation, and does not absorb the impact energy. Thus, the absorbing energy is significantly small as compared with that in the compact mode.

In FIG. 26, with respect to the volume of the thermally hardened area (volume fraction fin), the left vertical axis represents the absorbing energy, and the right vertical axis represents changes in incidence of non-compact mode (right vertical axis). In other words, the horizontal axis represents the ratio of the volume of the thermally hardened area 618 relative to the volume of each of the plural corner portions 613 and 617, in other words, a ratio of the volume of the thermally hardened area relative to R portions of the corner portion 613 and the corner portion 617 of the impact-absorbing member 610 in the embodiment illustrated in FIG. 21 to FIG. 23B, more specifically, relative to the volume of arc portions of the impact-absorbing member 610 having a center angle of 90° around the center O in FIG. 23A and FIG. 23B.

In this embodiment, the volume fraction fm of the thermally hardened area can be obtained from the following Expression (8).

$$fm = \Sigma Si/(t \times a) \cdots \text{Expression (8)}$$

In this expression, $\Sigma Si$ is a total of cross-sectional areas of thermally hardened areas in cross section of the thermally treated portion (mm$^2$), t is a plate thickness of an impact-absorbing member (mm), and a is a circumferential length at the thickness center of a corner portion (R portion) (mm).

It should be noted that, in this embodiment, a description has been made as an example that the arc portion has a center angle of 90°. However, the present invention is not limited to this, and the center angle may be set depending on modes of the impact-absorbing member 610.

From FIG. 26, it can be understood that, as the volume fraction fm of the thermally hardened area 618 increases, in other words, as the thermally hardened area 618 increases, the absorbing energy increases proportionally. In general, the absorbing energy associates with the yield stress of a material. With the increase in the yield stress of a material, the absorbing energy of the material increases. In the case where the volume fraction fm of the thermally hardened area 618 is small, the characteristic of the base material having the small yield stress predominantly affects the yielding manner, as compared with that of the thermally hardened area 618. Thus, the yield stress as a whole is almost the same as that of the yield stress of the base material, which results in reduced absorbing energy. On the other hand, in the case where the volume fraction fm of the thermally hardened area 618 relative to the volume of the base material is a "predetermined value" or more, the characteristic of the thermally hardened area largely affects the yielding manner. Thus, the yield stress increases, which increases the absorbing energy. In the graph of FIG. 26, it can be understood that the absorbing energy discontinuously increases in the vicinity where the volume fraction fm of the thermally hardened area 618 is about 8.8%.

On the other hand, in the case where the volume fraction fm of the thermally hardened area 618 is 80% or more, the incidence of buckling in the non-compact mode sharply increases. It is considered that this is because: (1) in order to harden the thermally hardened area so as to be the volume fraction fm of 80% or more, the laser-light emitted portions has to be placed nearer to each other, and if the laser light is emitted onto an area close to an area hardened with the laser light, the area hardened with the laser light is annealed with the inputted heat (reduction in hardness); and (2) as the reproducibility of distribution of hardness reduces (varies), the initial imperfection that causes the buckling is more likely to occur, which increases the incidence of the non-compact mode. In the non-compact mode, the absorbing energy is smaller than that under the condition where the volume fraction fm of the thermally hardened area is 0%. Thus, the volume fraction fm of the hardened area needs to be set to less than 80%. More preferably, the volume fraction fm of the hardened area is set to be less than 75%.

According to this embodiment, the hardening with the laser light is applied only to the corner portions 613 and 617 of the impact-absorbing member 610. This makes it possible to increase the absorbing energy of the impact-absorbing member with low cost and within a short period of time, and further reduce the thickness of the steel sheet.

Further, by setting the thermally hardened area 618 to be less than 80%, it is possible to reduce the occurrence of the crumple in the non-compact mode.

The technical scope of the the present invention is not limited to the first to third embodiments described above, and it may be possible to apply various modifications to the above-described embodiments within the scope of the present invention. In other words, specific structures and shapes illustrated in the embodiments are merely examples, and various modifications may be possible depending on applications.

Reference Signs List

1 Structural-member assembled body
10 Impact-absorbing member
11 Partial tubular body
12 Flat portion
13 Corner portion
14 Longitudinal end portion
15 Flange portion
16 Flat portion
17 Corner portion
19 Crumple bead
20 Additional structural member
610 Impact-absorbing member
612 First steel plate
613 Corner portion
614 Second steel plate
615 Flange portion
617 Corner portion
618 Thermally hardened area

## Claims

1. An impact-absorbing member (10; 110; 210; 310; 410; 510; 610) including a tubular body (11; 111; 211) having a polygonal shape in cross section perpendicular to a longitudinal direction of the tubular body (11; 111; 211), the tubular body (11; 111; 211) comprising:

   a plurality of flat portions (12; 112; 212; 612); and
   a plurality of corner portions (13; 613) provided between the flat portions (12; 112; 212; 612), **characterised in that** a thermal treatment with a laser light is applied at least to a first field of the tubular body (11; 111; 211) located in a distance X that satisfies Expression (1) below, where L is an average side length of all sides constituting the polygonal shape at an end portion (14) in the longitudinal direction of the tubular body (11; 111; 211), X is a distance in the longitudinal direction from the end portion (14) of the tubular body (11; 111; 211), and a is an integer with a value of one or more;
   a thermal treatment with the laser light is applied to a second field of the tubular body (11; 111; 211) located in the distance X that satisfies Expression (2) below; and
   a ratio of a first thermally treated area having a thermal treatment with the laser light applied thereto relative to an entire outer peripheral area of the first field is higher than a ratio of a second thermally treated area having a thermal treatment with the laser light applied thereto relative to an entire outer peripheral area of the second field:

$$(a - 1/2)L \leq X \leq aL \cdots \text{Expression (1)}$$

$$(a - 1)L \leq X \leq (a - 1/2)L \cdots \text{Expression (2).}$$

2. The impact-absorbing member according to claim 1, wherein a fragile portion having a lower strength than that of a surrounding portion is formed at the distance X that satisfies Expression (3) below:

$$X = (a - 3/4)L \cdots \text{Expression (3).}$$

3. An impact-absorbing member (10; 110; 210; 310; 410; 510; 610) including a tubular body (11; 111; 211) having a polygonal shape in cross section perpendicular to a longitudinal direction of the tubular body (11; 111; 211), the tubular body (11; 111; 211) comprising:

   a plurality of flat portions (12; 112; 212; 612); and
   a plurality of corner portions (13; 613) provided between the flat portions (12; 112; 212; 612), **characterised in that** a thermal treatment with a laser light is applied at least to a first field of the tubular body (11; 111; 211) located in a distance X that satisfies Expression (4) below, and a region of the tubular body (11; 111; 211) located at a distance of L/4 from an end portion (14), where L is an average side length of all sides constituting the polygonal shape at the end portion (14) in the longitudinal direction of the tubular body (11; 111; 211), X is a distance in the longitudinal direction from the end portion (14) of the tubular body (11; 111; 211), and a is an integer with a value of one or more,
   a thermal treatment with the laser light is applied to a second field of the tubular body (11; 111; 211) located in the distance X that satisfies Expression (5) below; and
   a ratio of a first thermally treated outer peripheral surface having a thermal treatment with the laser light applied thereto relative to an entire outer peripheral area of the first field is higher than a ratio of a second thermally treated area having a thermal treatment with the laser light applied thereto relative to an entire outer peripheral area of the second field:

$$(a - 1/4)L \leq X \leq (a+1/4)L \cdots \text{Expression (4)}$$

$$(a - 3/4)L \leq X \leq (a - 1/4)L \cdots \text{Expression (5).}$$

4. The impact-absorbing member according to claim 3, wherein a fragile portion having a lower strength than that of a surrounding portion is formed at the distance X that satisfies Expression (6) below:

$$X = (a - 1/2)L \cdots \text{Expression (6).}$$

5. The impact-absorbing member according to any one of claim 1 to claim 4, wherein a thermal treatment with the laser light is applied to the plurality of corner portions (13; 613).

6. The impact-absorbing member according to claim 5, wherein
   a thermally hardened area is formed with the laser light along an extending direction of the plurality of corner portions (13; 613), and
   a ratio of a volume of the thermally hardened area relative to a volume of each of the plurality of corner portions (13; 613) is less than 80%.

7. The impact-absorbing member according to claim 6, wherein the thermally hardened area is formed by a plurality of lines of the laser light along an extending direction of the plurality of the corner portions (13; 613).

8. The impact-absorbing member according to claim 6, wherein the thermally hardened area is formed so as to reach a depth of 3/4 of a plate thickness of each of the corner portions (13; 613) from a surface of each of the corner portions (13; 613).

9. The impact-absorbing member according to any one of claim 1 to claim 4, wherein a thermal treatment with the laser light is applied to the plurality of flat portions (12; 112; 212; 612).

10. The impact-absorbing member according to any one of claim 1 to claim 4, wherein
the plurality of flat portions (12; 112; 212; 612) includes a pair of side wall portions (12a, 12c) facing each other, an upper wall portion connecting upper ends of the pair of side wall portions (12a, 12c), and a flange portion (15; 115; 215; 615) formed so as to be away from each other and extending from a lower end of each of the side wall portions (12a, 12c),
the cross-sectional shape is configured as an opened cross section, and
the plurality of the corner portions (13; 613) is provided between the side wall portions (12a, 12c), the upper wall portion, and the flange portion (15; 115; 215; 615).

11. The impact-absorbing member according to any one of claim 1 to claim 4, wherein a closed cross section is formed by the plurality of flat portions (12; 112; 212; 612) and the plurality of corner portions (13; 613) when viewed in a cross section perpendicular to the longitudinal direction of the tubular body.

**Patentansprüche**

1. Aufprallabsorbierendes Teil (10; 110; 210; 310; 410; 510; 610) mit einem Röhrenkörper (11; 111; 211), der eine Polygonform im Querschnitt senkrecht zu einer Längsrichtung des Röhrenkörpers (11; 111; 211) hat, wobei der Röhrenkörper (11; 111; 211) aufweist:

mehrere Flachabschnitte (12; 112; 212; 612); und
mehrere Eckenabschnitte (13; 613), die zwischen den Flachabschnitten (12; 112; 212; 612) vorgesehen sind, **dadurch gekennzeichnet, dass**
eine Wärmebehandlung mit Laserlicht mindestens auf ein erstes Feld des Röhrenkörpers (11; 111; 211) angewendet ist, das in einem Abstand X liegt, der den nachstehenden Ausdruck (1) erfüllt, wobei L eine mittlere Seitenlänge aller Seiten ist, die die Polygonform an einem Endabschnitt (14) in Längsrichtung des Röhrenkörpers (11; 111; 211) bilden, X ein Abstand in Längsrichtung vom Endabschnitt (14) des Röhrenkörpers (11; 111; 211) ist und a eine ganze Zahl mit einem Wert von mindestens eins ist;
eine Wärmebehandlung mit dem Laserlicht auf ein zweites Feld des Röhrenkörpers (11; 111; 211) angewendet ist, das im Abstand X liegt, der den nachstehenden Ausdruck (2) erfüllt; und
ein Verhältnis einer ersten wärmebehandelten Fläche mit einer Wärmebehandlung mit dem darauf angewendeten Laserlicht relativ zu einer gesamten Außenumfangsfläche des ersten Felds höher als ein Verhältnis einer zweiten wärmebehandelten Fläche mit einer Wärmebehandlung mit dem darauf angewendeten Laserlicht relativ zu einer gesamten Außenumfangsfläche des zweiten Felds ist:

$$(a - 1/2)L \leq X \leq aL \qquad \text{Ausdruck (1)},$$

$$(a - 1)L \leq X \leq (a - 1/2)L \qquad \text{Ausdruck (2)}.$$

2. Aufprallabsorbierendes Teil nach Anspruch 1, wobei ein zerbrechlicher Abschnitt mit einer niedrigeren Festigkeit als die eines Umgebungsabschnitts im Abstand X gebildet ist, der den nachstehenden Ausdruck (3) erfüllt:

$$X = (a - 3/4)L \qquad \text{Ausdruck (3)}.$$

3. Aufprallabsorbierendes Teil (10; 110; 210; 310; 410; 510; 610) mit einem Röhrenkörper (11; 111; 211), der eine Polygonform im Querschnitt senkrecht zu einer Längsrichtung des Röhrenkörpers (11; 111; 211) hat, wobei der Röhrenkörper (11; 111; 211) aufweist:

mehrere Flachabschnitte (12; 112; 212; 612); und

mehrere Eckenabschnitte (13; 613), die zwischen den Flachabschnitten (12; 112; 212; 612) vorgesehen sind, **dadurch gekennzeichnet, dass**

eine Wärmebehandlung mit Laserlicht mindestens auf ein erstes Feld des Röhrenkörpers (11; 111; 211), das in einem Abstand X liegt, der den nachstehenden Ausdruck (4) erfüllt, und einen Bereich des Röhrenkörpers (11; 111; 211) angewendet ist, der in einem Abstand L/4 von einem Endabschnitt (14) liegt, wobei L eine mittlere Seitenlänge aller Seiten ist, die die Polygonform am Endabschnitt (14) in Längsrichtung des Röhrenkörpers (11; 111; 211) bilden, X ein Abstand in Längsrichtung vom Endabschnitt (14) des Röhrenkörpers (11; 111; 211) ist und a eine ganze Zahl mit einem Wert von mindestens eins ist,

eine Wärmebehandlung mit dem Laserlicht auf ein zweites Feld des Röhrenkörpers (11; 111; 211) angewendet ist, das im Abstand X liegt, der den nachstehenden Ausdruck (5) erfüllt; und

ein Verhältnis einer ersten wärmebehandelten Außenumfangsfläche mit einer Wärmebehandlung mit dem darauf angewendeten Laserlicht relativ zu einer gesamten Außenumfangsfläche des ersten Felds höher als ein Verhältnis einer zweiten wärmebehandelten Fläche mit einer Wärmebehandlung mit dem darauf angewendeten Laserlicht relativ zu einer gesamten Außenumfangsfläche des zweiten Felds ist:

$$(a - 1/4)L \leq X \leq (a + 1/4)L \qquad \text{Ausdruck (4),}$$

$$(a - 3/4)L \leq X \leq (a - 1/4)L \qquad \text{Ausdruck (5).}$$

4. Aufprallabsorbierendes Teil nach Anspruch 3, wobei ein zerbrechlicher Abschnitt mit einer niedrigeren Festigkeit als die eines Umgebungsabschnitts im Abstand X gebildet ist, der den nachstehenden Ausdruck (6) erfüllt:

$$X = (a - 1/2)L \qquad \text{Ausdruck (6).}$$

5. Aufprallabsorbierendes Teil nach einem der Ansprüche 1 bis 4, wobei eine Wärmebehandlung mit dem Laserlicht auf die mehreren Eckenabschnitte (13; 613) angewendet ist.

6. Aufprallabsorbierendes Teil nach Anspruch 5, wobei
eine wärmegehärtete Fläche mit dem Laserlicht in Verlaufsrichtung der mehreren Eckenabschnitte (13; 613) gebildet ist und
ein Verhältnis eines Volumens der wärmegehärteten Fläche relativ zu einem Volumen jedes der mehreren Eckenabschnitte (13; 613) unter 80 % liegt.

7. Aufprallabsorbierendes Teil nach Anspruch 6, wobei die wärmegehärtete Fläche durch mehrere Linien des Laserlichts in Verlaufsrichtung der mehreren Eckenabschnitte (13; 613) gebildet ist.

8. Aufprallabsorbierendes Teil nach Anspruch 6, wobei die wärmegehärtete Fläche so gebildet ist, dass sie eine Tiefe von 3/4 einer Plattendicke jedes der Eckenabschnitte (13; 613) von einer Oberfläche jedes der Eckenabschnitte (13; 613) erreicht.

9. Aufprallabsorbierendes Teil nach einem der Ansprüche 1 bis 4, wobei eine Wärmebehandlung mit dem Laserlicht auf die mehreren Flachabschnitte (12; 112; 212; 612) angewendet ist.

10. Aufprallabsorbierendes Teil nach einem der Ansprüche 1 bis 4, wobei die mehreren Flachabschnitte (12; 112; 212; 612) aufweisen: ein Paar Seitenwandabschnitte (12a, 12c), die zueinander weisen, einen oberen Wandabschnitt, der obere Enden des Paars Seitenwandabschnitte (12a, 12c) verbindet, und einen Flanschabschnitt (15; 115; 215; 615), die so gebildet sind, dass sie voneinander entfernt sind, und sich von einem unteren Ende jedes der Seitenwandabschnitte (12a, 12c) erstrecken,
die Querschnittform als offener Querschnitt konfiguriert ist und
die mehreren Eckenabschnitte (13; 613) zwischen den Seitenwandabschnitten (12a, 12c), dem oberen Wandabschnitt und dem Flanschabschnitt (15; 115; 215; 615) vorgesehen sind.

11. Aufprallabsorbierendes Teil nach einem der Ansprüche 1 bis 4, wobei ein geschlossener Querschnitt durch die mehreren Flachabschnitte (12; 112; 212; 612) und die mehreren Eckenabschnitte (13; 613) mit Blick in einem Querschnitt senkrecht zur Längsrichtung des Röhrenkörpers gebildet ist.

**Revendications**

**1.** Elément absorbant les impacts (10 ; 110 ; 210 ; 310 ; 410 ; 510 ; 610) comprenant un corps tubulaire (11 ; 111 ; 211) ayant une forme de polygone en coupe transversale perpendiculaire à une direction longitudinale du corps tubulaire (11 ; 111 ; 211), le corps tubulaire (11 ; 111 ; 211) comprenant :

une pluralité de parties plates (12 ; 112 ; 212 ; 612) ; et
une pluralité de parties formant un coin (13 ; 613) fournies entre les parties plates (12 ; 112 ; 212 ; 612), **caractérisé en ce que**
un traitement thermique avec une lumière laser est appliqué au moins à un premier champ du corps tubulaire (11 ; 111 ; 211) situé à une distance X qui satisfait l'expression (1) ci-dessous, où L est une moyenne de la longueur latérale de tous les côtés constituant la forme polygonale à une partie d'extrémité (14) suivant la direction longitudinale du corps tubulaire (11 ; 111 ; 211), X est une distance suivant la direction longitudinale à partir de la partie d'extrémité (14) du corps tubulaire (11 ; 111 ; 211), et a est un entier avec une valeur de un ou plus ;
un traitement thermique avec la lumière laser est appliqué à un second champ du corps tubulaire (11 ; 111 ; 211) situé dans la distance X qui satisfait l'expression (2) ci-dessous ; et
un rapport d'une première zone traitée thermiquement ayant un traitement thermique avec la lumière laser appliqué à celle-ci par rapport à une zone périphérique externe complète du premier champ est supérieur à un rapport d'une seconde zone traitée thermiquement ayant un traitement thermique avec la lumière laser appliqué à celle-ci par rapport à une zone périphérique externe complète du second champ :

$$(a - 1/2)L \leq X \leq aL \ \text{… Expression (1)}$$

$$(a - 1)L \leq X \leq (a - 1/2)L \ \text{… Expression (2).}$$

**2.** Elément absorbant les impacts selon la revendication 1, dans lequel une partie fragile ayant une résistance inférieure à celle d'une partie qui entoure est formée à la distance X, qui satisfait l'expression (3) ci-dessous :

$$X = (a - 3/4)L \ \text{… Expression (3).}$$

**3.** Elément absorbant les impacts (10 ; 110 ; 210 ; 310 ; 410 ; 510 ; 610) comprenant un corps tubulaire (11 ; 111 ; 211) ayant une forme polygonale en coupe transversale perpendiculaire à une direction longitudinale du corps tubulaire (11 ; 111 ; 211), le corps tubulaire (11 ; 111 ; 211) comprenant :

une pluralité de parties plates (12 ; 112 ; 212 ; 612) ; et
une pluralité de parties formant un coin (13 ; 613) fournies entre les parties plates (12 ; 112 ; 212 ; 612),

**caractérisé en ce que**

un traitement thermique avec une lumière laser est appliqué au moins à un premier champ du corps tubulaire (11 ; 111 ; 211) situé à une distance X qui satisfait l'expression (4) ci-dessous et une région du corps tubulaire (11 ; 111 ; 211) situé à une distance L/4 à partir d'une partie d'extrémité (14), où L est une moyenne de la longueur latérale de tous les côtés constituant la forme polygonale à la partie d'extrémité (14) suivant la direction longitudinale du corps tubulaire (11 ; 111 ; 211), X est une distance suivant la direction longitudinale à partir de la partie d'extrémité (14) du corps tubulaire (11 ; 111 ; 211), et a est un entier avec une valeur de un ou plus ;
un traitement thermique avec la lumière laser est appliqué à un second champ du corps tubulaire (11 ; 111 ; 211) situé dans la distance X qui satisfait l'expression (5) ci-dessous ; et
un rapport d'une première surface périphérique externe traitée thermiquement ayant un traitement thermique avec la lumière laser appliqué à celle-ci par rapport à une zone périphérique externe complète du premier champ est supérieur à un rapport d'une seconde zone traitée thermiquement ayant un traitement thermique avec la lumière laser appliqué à celle-ci par rapport à une zone périphérique externe complète du second champ :

$$(a - 1/4)L \leq X \leq (a+1/4)L \; \ldots \; \text{Expression (4)}$$

$$(a - 3/4)L \leq X \leq (a- 1/4)L \; \ldots \; \text{Expression (5)}.$$

4. Elément absorbant les impacts selon la revendication 3, dans lequel une partie fragile ayant une résistance inférieure à celle d'une partie qui entoure est formée à la distance X qui satisfait l'expression (6) ci-dessous :

$$X = (a - 1/2)L \; \ldots \; \text{Expression (6)}.$$

5. Elément absorbant les impacts selon l'une quelconque des revendications 1 à 4, dans lequel un traitement thermique avec la lumière laser est appliqué à la pluralité de parties formant un coin (13 ; 613).

6. Elément absorbant les impacts selon la revendication 5, dans lequel
une région durcie thermiquement est formée avec la lumière laser le long d'une direction d'extension de la pluralité des parties en forme de coin (13, 613), et
un rapport d'un volume de la région durcie thermiquement par rapport à un volume de chacune des parties de la pluralité de parties formant un coin (13 ; 613) est inférieur à 80 %.

7. Elément absorbant les impacts selon la revendication 6, dans lequel la région durcie thermiquement est formée par une pluralité de lignes de la lumière laser le long d'une direction d'extension de la pluralité des parties en forme de coin (13 ; 613).

8. Elément absorbant les impacts selon la revendication 6, dans lequel la région durcie thermiquement est formée de façon à atteindre une profondeur de 3/4 de l'épaisseur de plaque de chacune des parties formant un coin (13 ; 613) à partir d'une surface de chacune des parties formant un coin (13 ; 613).

9. Elément absorbant les impacts selon l'une quelconque des revendications 1 à 4, dans lequel un traitement thermique avec la lumière laser est appliqué à la pluralité de parties plates (12 ; 112 ; 212 ; 612).

10. Elément absorbant les impacts selon l'une quelconque des revendications 1 à 4, dans lequel la pluralité de parties plates (12 ; 112 ; 212 ; 612) comprend une paire de parties de paroi latérale (12a, 12c) se faisant face l'une à l'autre, une partie de paroi supérieure, reliant des extrémités supérieures de la paire de parties de paroi latérale (12a, 12c), et une partie de bride (15 ; 115 ; 215 ; 615) formées de façon à être éloignées l'une de l'autre et s'étendant à partir d'une extrémité inférieure de chacune des parties de paroi latérale (12a, 12c),
la forme en coupe transversale est configurée comme une coupe transversale ouverte, et
la pluralité des parties formant un coin (13 ; 613) est fournie entre les parties de paroi latérale (12a, 12c), la partie supérieure et la partie de bride (15 ; 115 ; 215 ; 615).

11. Elément absorbant les impacts selon l'une quelconque des revendications 1 à 4, dans lequel une section en coupe transversale fermée est formée par la pluralité de parties plates (12 ; 112 ; 212 ; 612) et la pluralité de parties formant un coin (13 ; 613) quand elle est considérée en coupe transversale perpendiculaire à la direction longitudinale du corps tubulaire.

# FIG. 1

# FIG. 2A

# FIG. 2B

# FIG. 2C

# FIG. 3A

# FIG. 3B

# FIG. 4

# FIG. 5

# FIG. 6

# FIG. 7

# FIG. 8

# FIG. 9

410

14

# FIG. 10

# FIG. 11

# FIG. 12A

# FIG. 12B

# FIG. 12C

# FIG. 12D

# FIG. 13A

# FIG. 13B

# FIG. 14

# FIG. 15

# FIG. 16

# FIG. 17

# FIG. 18

# FIG. 19

# FIG. 20

# FIG. 21

# FIG. 22

600

613a
(613)

612b
(612)

613b
(613)

612a
(612)

612c (612)

617a
(617)

617b (617)

614

# FIG. 23A

618

613b

R

613c

618

O

# FIG. 23B

# FIG. 24

# FIG. 25

# FIG. 26

**EP 2 541 093 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2010189431 A
- JP 2010189477 A
- JP 7119892 A
- JP S6199629 B
- JP H0472010 B
- JP H0673439 B
- JP 2004108541 A